# EUROPEAN PATENT APPLICATION

(11) **EP 4 053 308 A1**
(43) Date of publication of application: **07.09.2022**
(21) Application number: 20881628.0
(22) Date of filing: 23.10.2020
(51) Int. Cl.: C25B 13/02, C25B 1/04, C25B 9/00, C25B 11/03

(54) **ELASTIC MAT FOR ALKALINE WATER ELECTROLYSIS CELLS**

(30) Priority: 31.10.2019 JP 2019198760
(71) Applicant: Tokuyama Corporation, Shunan-shi, Yamaguchi 745-8648 (JP)
(72) Inventor: TANAKA, Yasuyuki, Shunan-shi, Yamaguchi 745-8648 (JP); SUEOKA, Harumi, Shunan-shi, Yamaguchi 745-8648 (JP)
(74) Representative: Viering, Jentschura & Partner mbB Patent- und Rechtsanwälte
(86) International application number: PCT/JP2020/039947
(87) International publication number: WO 2021/085334

(57) **Abstract**

An elastic mat for an alkaline water electrolysis vessel includes: at least one wire net being woven or knitted with a metal wire and having spring elasticity in a thickness direction thereof, wherein the metal wire is a solid wire having a diameter of 0.16 to 0.29 mm, or a stranded wire including a plurality of solid wires each having a diameter of 0.08 to 0.15 mm, or any combination thereof.

## Description

### Technical Field

The present invention relates to an elastic mat used for an alkaline water electrolysis vessel, and more specifically to an elastic mat used for a zero-gap alkaline water electrolysis vessel, to an alkaline water electrolysis vessel provided with this elastic mat, and to a gas production method using this alkaline water electrolysis vessel.

### Background Art

The alkaline water electrolysis method is known as a method of producing hydrogen gas and oxygen gas. In the alkaline water electrolysis method, water is electrolyzed using a basic solution (alkaline water) in which an alkali metal hydroxide (such as NaOH and KOH) dissolves as an electrolytic solution to generate hydrogen gas at a cathode and oxygen gas at an anode. As the electrolysis vessel for the alkaline water electrolysis, an electrolysis vessel including an anode chamber and a cathode chamber which are separated by an ion-permeable separating membrane is known: the anode is disposed in the anode chamber, and the cathode is disposed in the cathode chamber. Further, an electrolysis vessel having a zero-gap configuration (zero-gap electrolysis vessel) is proposed for reducing energy loss: in this configuration, the anode and the cathode are held so as to be in direct contact with the separating membrane.

### Citation List

### Patent Literature

Patent Literature 1: JP 3616265 B2
Patent Literature 2: JP 3707985 B2
Patent Literature 3: JP 5695418 B2
Patent Literature 4: JP 6318678 B2
Patent Literature 5: WO 2013/191140 A1
Patent Literature 6: JP 6093351 B2
Patent Literature 7: JP 4453973 B2
Patent Literature 8: JP 2015-117417 A

### Summary of Invention

### Technical Problem

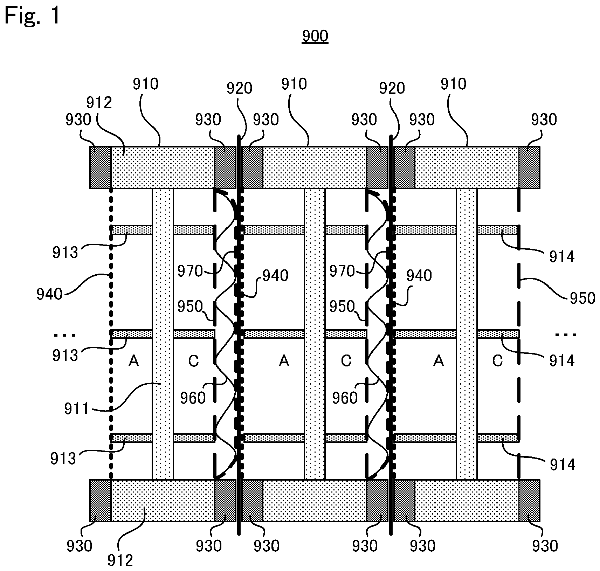

Fig. 1 is a schematically explanatory partial cross-sectional view of a conventional zero-gap electrolysis vessel 900 according to one embodiment. The zero-gap electrolysis vessel 900 comprises electrode chamber units 910, 910, ... each including an electroconductive separating wall 911 that separates an anode chamber A and a cathode chamber C, and a flange part 912. Each pair of adjacent units in the electrode chamber units 910, 910, ... includes an ion-permeable separating membrane 920 arranged therebetween; gaskets 930, 930 arranged between the separating membrane 920 and the flange parts 912 of the electrode chamber units 910, 910, between which the periphery of the separating membrane 920 is sandwiched; an anode 940 held by electroconductive ribs 913, 913, ... that protrude from the separating wall 911 of one electrode chamber unit; and a flexible cathode 970 held by a current collector 950 that is held by electroconductive ribs 914, 914, ... that protrude from the separating wall 911 of the other electrode chamber unit, and an electroconductive elastic mat 960 that is arranged in contact with the current collector 950. The periphery of the cathode 970 and the periphery of the electroconductive elastic mat 960 are fixed to the periphery of the current collector 950. In each pair of adjacent units of the electrode chamber units 910, 910, ... in the zero-gap electrolysis vessel 900, the electroconductive elastic mat 960 pushes the flexible cathode 970 toward the separating membrane 920 and the anode 940, which makes the separating membrane 920 sandwiched between the cathode 970 and anode 940. As a result, the separating membranes 920 is in direct contact (zero-gap) with the anode 940 and the cathode 970, which reduces the solution resistance between the anode 940 and the cathode 970, and thus reduces the energy loss.

Conventionally, a zero-gap electrolysis vessel for sodium chloride electrolysis which comprises a separating membrane (920) instead of an ion-exchange membrane has been used as a zero-gap alkaline water electrolysis vessel in general.

Generally, the proportion of an area where zero-gap is achieved (zero-gap area) in the electrode area is desirably high in a zero-gap electrolysis vessel because a large area where zero-gap is not achieved (not in direct contact with the anode or the cathode, and the ion-exchange membrane or the separating membrane) results in a high solution resistance between the electrodes in this area to increase the operating voltage.

Desirably, the electrodes are completely flat for achieving zero-gap. However, the electrodes are likely to bend often due to gravity, dimensional errors, etc. A bending electrode easily results in formation of a gap between the electrode and the membrane. It is considered that a higher contact pressure at which the membrane is sandwiched between and pushed by the electrodes has a greater advantage in view of increasing the proportion of the zero-gap area in the electrode area even when any of the electrodes bends.

However, in a zero-gap electrolysis vessel comprising an ion-exchange membrane, such as a sodium chloride electrolysis vessel, air bubbles generated following the electrolytic reaction vibrate the electrodes and the ion-exchange membrane, which causes the surface of the ion-exchange membrane sandwiched between the electrodes in a zero-gap state to abrade to impair the function of the ion exchange group, so that the ion-exchange capacity of the ion-exchange membrane deteriorates over time, which is problematic. Such a problem of the deterioration of the ion-exchange membrane due to the vibration caused by the generation of air bubbles is particularly prominent when the contact pressure at which the ion-exchange membrane is sandwiched between and pushed by the electrodes is high. An ion-exchange membrane is generally expensive. Accelerated deterioration of the ion-exchange membrane seriously affects the running costs of the electrolysis process unfavorably. Therefore, in a zero-gap electrolysis vessel comprising an ion-exchange membrane, it is required to suppress the contact pressure at which the ion-exchange membrane is sandwiched between and pushed by the electrodes so that the expensive ion-exchange membrane can be used over a long period of time.

For example, Patent Literature 1 discloses "an ion-exchange membrane electrolysis vessel comprising an anode chamber and a cathode chamber which are separated by an anode ion-exchange membrane, wherein an anode is in the anode chamber and a cathode is in the cathode chamber; both the electrodes are closely disposed and face each other with the ion-exchange membrane being therebetween in structure; one of the electrodes is a porous body that has a lot of pores each having an opening area of 0.05 to 1.0 mm² and a ratio of the pore opening area of 20% or more, and is a flexible porous plate having a bending flexibility of 0.05 mm/g or more; the other electrode is a rigid porous plate; and the electrode of the flexible porous plate is pushed toward the other electrode at a pressure of 20 to 60 g/cm² by an elastic mat formed of an aggregate of metal wires which has resilience in 50% compressive deformation of 30 to 50 g/cm² and resilience in 20% compressive deformation of 10 to 30 g/cm² in elasticity, the elastic mat being obtained by stacking a plurality of wire nets formed by weaving and crimping a stranded wire including two to eight metal wires each having a diameter of 0.02 to 0.09 mm".

On the contrary, a separating membrane generally used for alkaline water electrolysis is a porous membrane. The ion-exchange mechanism of a porous membrane does not depend on the chemical effect of the ion-exchange group. Thus, it is considered that the ion-exchange capacity of the separating membrane hardly deteriorates even if the contact pressure at which the separating membrane is sandwiched between and pushed by the electrodes is high. That is, in a conventional zero-gap alkaline water electrolysis vessel, if the contact pressure at which the separating membrane is sandwiched between and pushed by the electrodes can be increased, it is possible to more stably maintain the zero-gap configuration even if the pressure inside the electrolysis vessel changes and it is expectable to increase the proportion of the zero-gap area in the electrode area to improve the energy efficiency without a large decrease in the lifetime of the separating membrane. However, in a conventional zero-gap alkaline water electrolysis vessel, the elastic mat crushes when the contact pressure at which the separating membrane is sandwiched between and pushed by the electrodes is tried to be increased, and thus the zero-gap configuration cannot be maintained and the uniformity of the distribution of the contact pressure among the electrodes and the separating membrane deteriorates. The ununiformity of the distribution of the contact pressure among the electrodes and the separating membrane tends to lead to the ununiformity of the electrolytic current on the electrode face. The ununiformity of the distribution of the electrolytic current on the electrode face causes the operating voltage to increase and the energy efficiency to decrease instead.

An object of the present invention is to provide an elastic mat for an alkaline water electrolysis vessel which makes it possible to increase the energy efficiency of an alkaline water electrolysis vessel. An alkaline water electrolysis vessel provided with this elastic mat, and a gas production method using this alkaline water electrolysis vessel are also provided.

### Solution to Problem

The present invention encompasses the following embodiments [1] to [14]:
[1] an elastic mat for an alkaline water electrolysis vessel, the elastic mat comprising:
   at least one wire net being woven or knitted with a metal wire and having spring elasticity in a thickness direction thereof,
   wherein the metal wire is a solid wire having a diameter of 0.16 to 0.29 mm, or a stranded wire including a plurality of solid wires each having a diameter of 0.08 to 0.15 mm, or any combination thereof;
[2] the elastic mat according [1],
   wherein resilience of the elastic mat per unit area when the elastic mat is subjected to 50% compressive deformation is 100 to 450 gf/cm²;
[3] the elastic mat according to [1] or [2],
   wherein when the 50% compressive deformation of the elastic mat is repeated twice, resilience of the elastic mat per unit area in a second 50% compressive deformation is no less than 40 gf/cm²;
[4] the elastic mat according to any one of [1] to [3],
   wherein the wire net has a wave shape having an amplitude in the thickness direction of the wire net;
[5] the elastic mat according to [4],
   the elastic mat comprising a plurality of the wire nets stacked in the thickness direction of the plurality of the wire nets,
   wherein each pair of two adjacent wire nets of the plurality of the wire nets are stacked in such a way that ridge parts of the wave shape of a first wire net of the pair and ridge parts of the wave shape of a second wire net of the pair cross each other in a plan view of the elastic mat;
[6] the elastic mat according to any one of [1] to [5],
   wherein the elastic mat has a total thickness of 7.5 to 10 mm;
[7] an alkaline water electrolysis vessel comprising:
   an anode chamber housing an anode and generating oxygen gas;
   a cathode chamber housing a cathode and generating hydrogen gas;
   an ion-permeable separating membrane separating the anode chamber and the cathode chamber; and
   a first elastic mat being the elastic mat as defined in any one of [1] to [6],
   wherein the cathode is a first electrode;
   the anode is a second electrode; and
   the first electrode is a flexible porous plate, and is pushed toward the second electrode by the first elastic mat;
[8] an alkaline water electrolysis vessel comprising:
   an anode chamber housing an anode and generating oxygen gas;
   a cathode chamber housing a cathode and generating hydrogen gas;
   an ion-permeable separating membrane separating the anode chamber and the cathode chamber; and
   a first elastic mat being the elastic mat as defined in any one of [1] to [6],
   wherein the anode is a first electrode;
   the cathode is a second electrode; and
   the first electrode is a flexible porous plate, and is pushed toward the second electrode by the first elastic mat;
[9] the alkaline water electrolysis vessel according to [7] or [8],
   wherein the second electrode is a rigid porous plate;
[10] the alkaline water electrolysis vessel according to [9], further comprising:
   a second elastic mat being the elastic mat as defined in any one of [1] to [6],
   wherein the second electrode is pushed toward the first electrode by the second elastic mat;
[11] the alkaline water electrolysis vessel according to [7] or [8], further comprising:
   a second elastic mat being the elastic mat as defined in any one of [1] to [6],
   wherein the second electrode is a second flexible porous plate; and
   the second electrode is pushed toward the first electrode by the second elastic mat;
[12] the alkaline water electrolysis vessel according to [7] or [8], further comprising:
   an electroconductive rigid current collector contacting the second electrode,
   wherein the second electrode is a second flexible porous plate; and
   the second electrode is supported by the rigid current collector;
[13] the alkaline water electrolysis vessel according to [12], further comprising:
   a second elastic mat being the elastic mat as defined in any one of [1] to [6],
   wherein the second electrode is pushed toward the first electrode by the second elastic mat, wherein the rigid current collector is arranged between the second electrode and the second elastic mat; and
[14] a gas production method comprising:
   (a) electrolyzing alkaline water by means of the alkaline water electrolysis vessel as defined in any one of [7] to [13],
      wherein hydrogen gas and oxygen gas are produced.

### Advantageous Effects of Invention

An elastic mat for an alkaline water electrolysis vessel according to the first aspect of the present invention comprises a wire net being woven or knitted with a predetermined metal wire, whereby the resilience thereof can be increased. The use of an elastic mat for an alkaline water electrolysis vessel according to the present invention in an alkaline water electrolysis vessel as an electroconductive elastic mat can lead to an increased contact pressure at which the separating membrane is sandwiched between and pushed by the electrodes without impairing the uniformity of the contact pressure, to increase the proportion of the zero-gap area in the electrode area, so that the energy efficiency of the alkaline water electrolysis vessel can be improved.

In an alkaline water electrolysis vessel according to the second aspect of the present invention, one electrode is pushed toward the other electrode by an elastic mat according to the first aspect of the present invention. This makes it possible to increase the contact pressure at which the separating membrane is sandwiched between and pushed by the electrodes without impairing the uniformity of the contact pressure, to increase the proportion of the zero-gap area in the electrode area, so that the operating voltage can be decreased to improve the energy efficiency.

In a gas production method according to the third aspect of the present invention, electrolysis is carried out by means of an alkaline water electrolysis vessel according to the second aspect of the present invention, so that the operating voltage can be decreased to improve the energy efficiency.

### Brief Description of Drawings

Fig. 1 is a schematically explanatory cross-sectional view of the conventional zero-gap electrolysis vessel 900 according to one embodiment.
Fig. 2 is a schematically explanatory view of an elastic mat 100 for an alkaline water electrolysis vessel according to one embodiment of the present invention: Fig. 2(A) is a plan view; Fig. 2(B) is a cross-sectional view taken along the line B-B in Fig. 2(A); Fig. 2(C) is a cross-sectional view taken along the line C-C in Fig. 2(A); and Fig. 2(D) is a cross-sectional view taken along the line D-D in Fig. 2(A).
Fig. 3 is a partially enlarged plan view of a wire net 10 according to one embodiment.
Fig. 4 is a schematically explanatory view of a planar wire net 10-pre1: Figs. 4(A) and 4(B) are a plan view and a front view of the wire net 10-pre1, respectively.
Fig. 5 is a schematically explanatory view of a cylindrical wire net 10-cyl, and a wire net 10-pre2 obtained from the cylindrical wire net 10-cyl: Figs. 5(A) and 5(B) are a plan view and a front view of the cylindrical wire net 10-cyl, respectively; and Figs. 5(C) and 5(D) are a plan view and a front view of the wire net 10-pre2, respectively.
Fig. 6 is a schematically explanatory plan view of an elastic mat 200 for an alkaline water electrolysis vessel according to another embodiment of the present invention.
Fig. 7 is a schematically explanatory plan view of an elastic mat 300 for an alkaline water electrolysis vessel according to another embodiment of the present invention.
Fig. 8 is a schematically explanatory view of an elastic mat 400 for an alkaline water electrolysis vessel according to another embodiment of the present invention: Figs. 8(A) and 8(B) are a plan view and a front view of the elastic mat 400, respectively; and Fig. 8(C) is a cross-sectional view taken along the line C-C in Fig. 8(B).
Fig. 9 is a transparent plan view of the elastic mat 400.
Fig. 10 is a transparent plan view of an elastic mat 500 for an alkaline water electrolysis vessel according to another embodiment of the present invention.
Fig. 11 is a transparent plan view of an elastic mat 600 for an alkaline water electrolysis vessel according to another embodiment of the present invention.
Fig. 12 is a schematically explanatory cross-sectional view of an alkaline water electrolysis vessel 1000 according to one embodiment of the present invention.
Fig. 13 is a schematically explanatory cross-sectional view of an alkaline water electrolysis vessel 2000 according to another embodiment of the present invention.
Fig. 14 is a schematically explanatory cross-sectional view of an alkaline water electrolysis vessel 3000 according to another embodiment of the present invention.
Fig. 15 is a schematically explanatory cross-sectional view of an alkaline water electrolysis vessel 4000 according to another embodiment of the present invention.
Fig. 16 is a schematically explanatory cross-sectional view of an alkaline water electrolysis vessel 5000 according to another embodiment of the present invention.
Fig. 17 is a schematically explanatory cross-sectional view of an alkaline water electrolysis vessel 6000 according to another embodiment of the present invention.
Fig. 18(A) is a schematically explanatory plan view of a metal container 90 for measuring the resilience of an elastic mat per unit area in compressive deformation; and Fig. 18(B) is a cross-sectional view taken along the line B-B in Fig. 18(A).

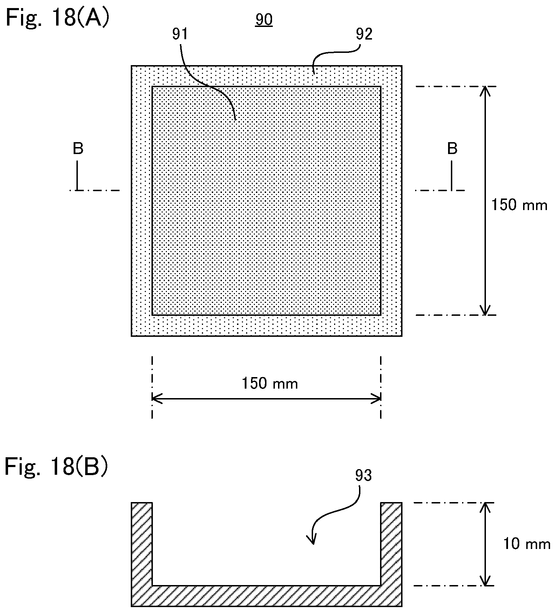

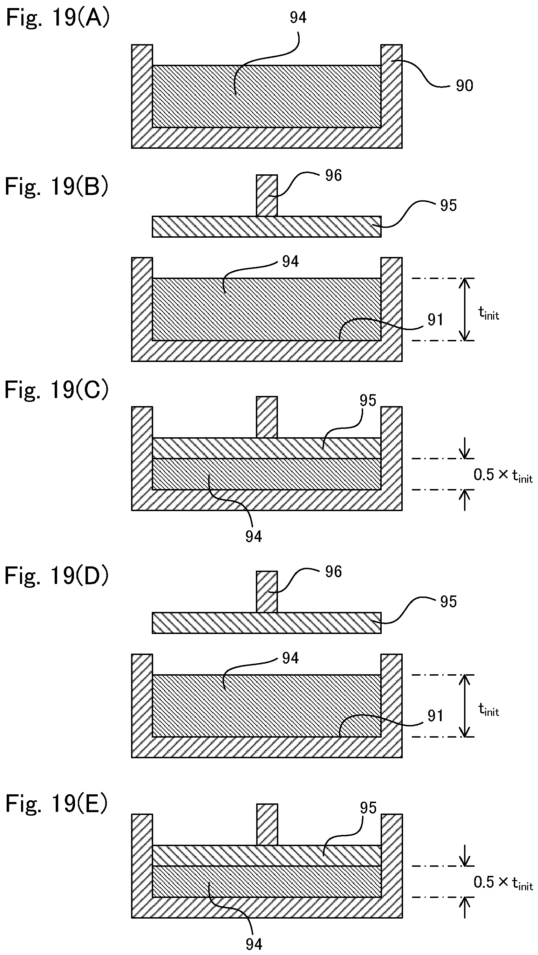

Fig. 19(A) is a schematically explanatory cross-sectional view showing a state in which a specimen 94 is disposed on a bottom plate 91 in Fig. 18(B). Fig. 19(B) is a schematically explanatory cross-sectional view showing the positional relationship of the metal container 90, the specimen 94 and a press plate 95 before the press plate 95 is in contact with the specimen 94. Fig. 19(C) is a schematically explanatory cross-sectional view showing the positional relationship of the metal container 90, the specimen 94 and the press plate 95 at the time point when the press plate is lowered, so that the thickness of the specimen 94 becomes 50% of the initial thickness tᵢₙᵢₜ. Fig. 19(D) is a schematically explanatory cross-sectional view showing a state where the press plate 95 is raised and then the shape of the specimen 94 sufficiently recovers. Fig. 19(E) is a schematically explanatory cross-sectional view showing the positional relationship of the metal container 90, the specimen 94 and the press plate 95 in the second 50% compressive deformation.

### Description of Embodiments

The description of the embodiments as follows will clarify the above-described effects and advantages of the present invention. Hereinafter the embodiments of the present invention will be described with reference to the drawings. The present invention is not limited to these embodiments. The dimensions in the drawings do not always represent exact dimensions. Some reference signs may be omitted in the drawings. In the present description, the expression "A to B" concerning numeral values A and B shall mean "no less than A and no more than B" unless otherwise specified. In such an expression, if a unit is added only to the numeral value B, this unit shall be applied to the numeral value A as well. A word "or" shall mean a logical sum unless otherwise specified. The expression "E₁ and/or E₂" concerning elements E₁ and E₂ shall mean "E₁, or E₂, or the combination thereof", and the expression "E₁, ..., E_{N-1}, and/or E_{N}" concerning elements E₁, ..., E_{N} (N is an integer of 3 or more) shall mean "E₁, ..., E_{N-1}, or E_{N}, or any combination thereof".

### <1. Elastic Mat for Alkaline Water Electrolysis Vessel>

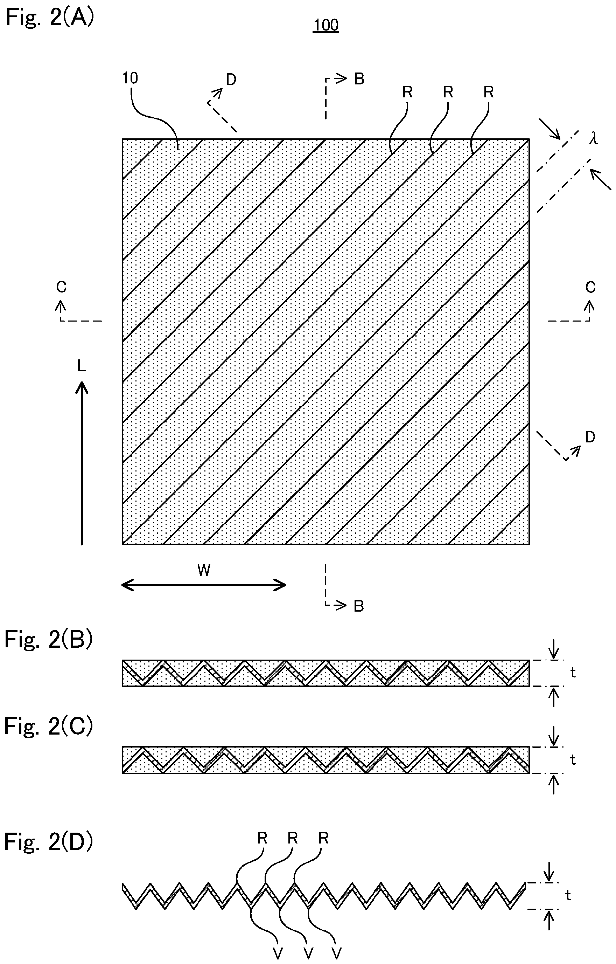

Fig. 2 is a schematically explanatory view of an elastic mat 100 for an alkaline water electrolysis vessel according to one embodiment of the present invention (hereinafter may be referred to as "elastic mat 100"). In Fig. 2, Fig. 2(A) is a plan view of the elastic mat 100, Fig. 2(B) is a cross-sectional view taken along the line B-B in Fig. 2(A), Fig. 2(C) is a cross-sectional view taken along the line C-C in Fig. 2(A), and Fig. 2(D) is a cross-sectional view taken along the line D-D in Fig. 2(A).

As shown in Fig. 2(A), the elastic mat 100 comprises a wire net 10. The wire net 10 is a wire net being woven or knitted with a metal wire and having spring elasticity in a thickness direction thereof. As shown in Figs. 2(B), 2(C) and 2(D), the wire net 10 has a wave shape (triangular wave shape) having an amplitude in the thickness direction thereof (direction perpendicular to the sheet in Fig. 2) almost all over the faces of the wire net 10. Fig. 2(A) shows ridge parts (ridgelines) R, R, ... of the wave shape in solid lines. As shown in Fig. 2(D), each of valley parts (valley lines) V, V, ... is present between adjacent ridge parts (ridgelines) R, R, .... The wire net 10 has the wave shape having an amplitude in the thickness direction, thereby having spring elasticity in the thickness direction. The plan view of the wire net 10 (Fig. 2(A)) shows the linear and parallel ridge parts (ridgelines) R, R, ... derived from the wave shape of the wire net 10. In Fig. 2(A), the arrow L represents the direction in which knitting of the wire net 10 proceeds (described later), and the arrow W represents the width direction of the knitting of the wire net 10 (described later).

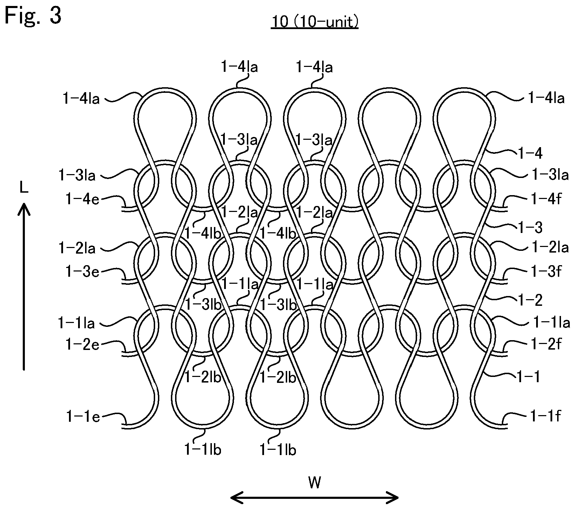

Fig. 3 is a partially enlarged plan view of the wire net 10 according to one embodiment. In Fig. 3, the elements already shown in Fig. 2 are given the same reference signs as in Fig. 2, and the description thereof will be omitted. For convenience of explanation, Fig. 3 does not show the wave shape of the wire net 10. As shown in Fig. 3, the wire net 10 is knitted with metal wires 1-1, 1-2, 1-3, 1-4, ... (hereinafter may be referred to as "metal wire 1-n" (n = 1, 2, ...) or simply "metal wire 1").

The metal wire 1 is a solid wire having a diameter of 0.16 to 0.29 mm, or a stranded wire including a plurality of solid wires each having a diameter of 0.08 to 0.15 mm, or any combination thereof. In other words, the metal wire 1 may be a solid wire having a diameter of 0.16 to 0.29 mm, and may be a stranded wire including a plurality of solid wires each having a diameter of 0.08 to 0.15 mm. The wire net 10 may be woven or knitted with the solid wire and the stranded wire in combination. For example, the metal wires 1-1, 1-3, ... 1-(2k-1), ... may be the solid wires, and the metal wires 1-2, 1-4, ... 1-(2k), ... may be the stranded wires (k = 1, 2, ...).

When the metal wire 1 is the solid wire, the diameter of the solid wire is 0.16 to 0.29 mm as described above, and preferably 0.16 to 0.25 mm. When the metal wire 1 is the stranded wire, the diameter of each of the solid wires included in the stranded wire is 0.08 to 0.15 mm as described above, and preferably 0.08 to 0.12 mm. The respective diameters at the above lower limits or higher can lead to increased spring elasticity of the elastic mat 100, which makes it possible to, when the elastic mat 100 is used in an alkaline water electrolysis vessel, more stably maintain the zero-gap configuration even if the pressure inside the alkaline water electrolysis vessel changes, and to increase the contact pressure at which the separating membrane is sandwiched between and pushed by the electrodes without impairing the uniformity of the contact pressure, to increase the proportion of the zero-gap area in the electrode area, so that the energy efficiency can be improved. The respective diameters at the above upper limits or lower can lead to increased repetitive resilience so that sufficient resilience can be maintained even in long-term use, which makes it possible to keep the energy efficiency of the alkaline water electrolysis vessel high for a long term.

The number of the solid wires included in the stranded wire is not particularly limited, but is preferably 2 to 4, and can be 2 to 3 in one embodiment. The number of the solid wires included in the stranded wire at the above lower limit or higher can lead to increased spring elasticity of the elastic mat 100, which makes it possible to, when the elastic mat 100 is used in an alkaline water electrolysis vessel, more stably maintain the zero-gap configuration even if the pressure inside the alkaline water electrolysis vessel changes, and to increase the contact pressure at which the separating membrane is sandwiched between and pushed by the electrodes without impairing the uniformity of the contact pressure, to increase the proportion of the zero-gap area in the electrode area, so that the energy efficiency can be improved. The number of the solid wires included in the stranded wire at the above upper limit or lower makes it possible to suppress mechanical damage to the surface of the separating membrane.

An alkali-resistant metal wire of high toughness may be preferably used for the metal wire 1. Further, the metal wire 1 preferably has high electrical conductivity since the elastic mat 100 also functions as a current collector. Preferred examples of such a metal wire include a nickel wire; and low carbon steel wires, stainless steel wires such as SUS304, SUS310, SUS310S, SUS316, SUS316L, and metal wires obtained by nickeling any of them. In one embodiment, a plurality of metal wires of different materials may be used in combination. For example, a low carbon steel wire or a stainless wire that has high toughness but is not excellent in electrical conductivity in particular, and a nickel wire that has high electrical conductivity but is not excellent in toughness in particular may be used in combination. In one embodiment, a stranded wire including a plurality of solid wires of different materials may be used.

The stitch shown in Fig. 3 is a stockinette stitch. In Fig. 3, the arrow L represents the direction in which the knitting proceeds, and the arrow W, which is perpendicular to the arrow L, represents the width direction of the knitting. As shown in Fig. 3, the metal wire 1-n is bent so as to repeatedly form first loop parts 1-nla and second loop parts 1-nlb alternately: the first loop parts 1-nla protrude in an opposite direction from the direction where the second loop parts 1-nlb protrude. That is, in the length direction of the metal wire 1-n, the first loop parts 1-nla, 1-nla, ... and the second loop parts 1-nlb, 1-nlb, ... are alternately provided. For example, the metal wire 1-1 is bent so as to alternately form the first loop parts 1-1la and the second loop parts 1-1lb: the first loop parts 1-1la protrude in an opposite direction from the direction where the second loop parts 1-1lb protrude. As a result of this, in the length direction of the metal wire 1-1, the first loop parts 1-1la, 1-1la, ... and the second loop parts 1-1lb, 1-1lb, ... are alternately provided. The metal wires 1-n and 1-(n+1), which are adjacent to each other, are caught by each other, so that the first loop parts 1-(n+1)la of the metal wire 1-(n+1) pass under the first loop parts 1-nla of the metal wire 1-n, and the second loop parts 1-nlb of the metal wire 1-n pass under the second loop parts 1-(n+1)lb of the metal wire 1-(n+1). In other words, the second loop parts 1-(n+1)lb of the metal wire 1-(n+1) are caught by pairs of adjacent first loop parts 1-nla, 1-nla of the metal wire 1-n, and the first loop parts 1-nla of the metal wire 1-n are caught by pairs of adjacent second loop parts 1-(n+1)nlb, 1-(n+1)nlb of the metal wire 1-(n+1). The stockinette stitch of the metal wires 1-1, 1-2, ... as described above can lead to increased spring elasticity and repetitive resilience (retention of resilience) of the elastic mat 100. For readability of the drawing, Fig. 3 shows only the five first loop parts 1-nla and the four second loop parts 1-nlb of the metal wire 1-n. Fig. 3 is just a partially enlarged view. The numbers of the first loop parts 1-nla, 1-nla, ... and the second loop parts 1-nlb, 1-nlb, ... provided in the metal wire 1-n may be suitably determined by those skilled in the art according to the dimensions of the wire net 10.

The metal wire 1-n has a first end part 1-ne and a second end part 1-nf. The process on the end parts of the metal wire 1 are not limited to any specific embodiment.

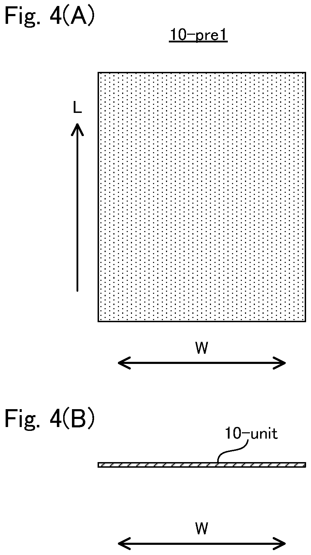

In one embodiment, the first end part 1-ne of the metal wire 1-n may be joined to the first end part 1-(n+1)e of the metal wire 1-(n+1), which is adjacent to the metal wire 1-n, and the second end part 1-nf of the metal wire 1-n may be joined to the second end part 1-(n+1)nf of the metal wire 1-(n+1), which is adjacent to the metal wire 1-n. A planar wire net 10-pre1 that has one layer being knitted with the metal wires 1-1, 1-2, 1-3, ... shown in Fig. 3 (hereinafter may be referred to as "unit layer 10-unit") is obtained by the process on the end parts according to such an embodiment. Fig. 4 is a schematically explanatory view of the wire net 10-pre1 according to such an embodiment. Figs. 4(A) and 4(B) are a plan view and a front view of the wire net 10-pre1, respectively. In Fig. 4, the elements already shown in Figs. 2 to 3 are given the same reference signs as in Figs. 2 to 3, and the description thereof may be omitted. As shown in Fig. 4(B), the wire net 10-pre1 is in a planar form, and has the one unit layer 10-unit only. For joining end parts of the metal wire 1 to each other, a known joining means such as welding, contact bonding, brazing, and knot connection may be used without particular limitations.

In another embodiment, the first end part 1-(2k-1)e of the metal wire 1-(2k-1) (k = 1, 2, ...) may be joined to or continuous with the first end part 1-(2k)e of the metal wire 1-(2k) (k = 1, 2, ...), which is adjacent to the metal wire 1-(2k-1), and the second end part 1-(2k)f of the metal wire 1-(2k) (k = 1, 2, ...) may be joined to or continuous with the second end part 1-(2k+1)f of the metal wire 1-(2k+1) (k = 1, 2, ...), which is adjacent to the metal wire 1-(2k). For example, in Fig. 3, the first end part 1-1e of the metal wire 1-1 may be continuous with the first end part 1-2e of the metal wire 1-2, and the second end part 1-2f of the metal wire 1-2 may be continuous with the second end part 1-3f of the metal wire 1-3; and the first end part 1-3e of the metal wire 1-3 may be continuous with the first end part 1-4e of the metal wire 1-4, and the second end part 1-4f of the metal wire 1-4 may be continuous with the second end part 1-5f of the metal wire 1-5 (not shown). The process on the end parts according to such an embodiment makes it possible to knit the entire planar wire net 10-pre1 (Fig. 4) having only the one unit layer 10-unit with one continuous metal wire (that may be the solid wire, and may be the stranded wire).

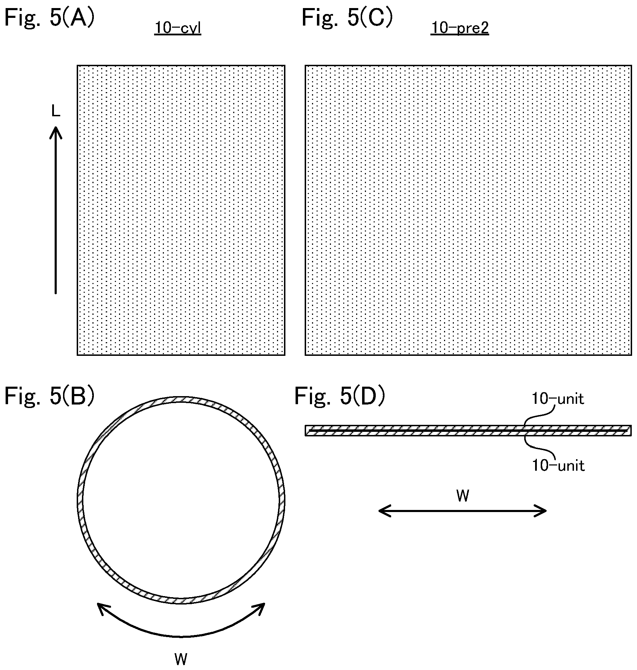

In another embodiment, the first end part 1-ne of the metal wire 1-n may be joined to the second end part 1-nf of the metal wire 1-n. A wire net 10-cyl that is cylindrical as a whole (Figs. 5(A) and 5(B)) is obtained by the process on the end parts according to such an embodiment. Fig. 5 is a schematically explanatory view of the cylindrical wire net 10-cyl, and a wire net 10-pre2 obtained from the cylindrical wire net 10-cyl. Figs. 5(A) and 5(B) are a plan view and a front view of the cylindrical wire net 10-cyl, respectively. In Fig. 5, the elements already shown in Figs. 2 to 4 are given the same reference signs as in Figs. 2 to 4, and the description thereof may be omitted. The planar wire net 10-pre2, which is the two stacked unit layers 10-unit (see Fig. 3) in structure, is obtained by squashing the cylindrical wire net 10-cyl in the radial direction of the cylinder (direction parallel to the sheet in Fig. 5(B)). Figs. 5(C) and 5(D) are a plan view and a front view of the wire net 10-pre2, respectively. As shown in Fig. 5(D), in the wire net 10-pre2, the two unit layers 10-unit are continuous with each other at the end parts in the width direction of the knitting. For convenience of the drawing, Fig. 5(D) shows as if there were a space between the unit layers 10-unit, 10-unit. Actually, both are in contact with each other.

In another embodiment, the first end part 1-ne of the metal wire 1-n may be joined to or continuous with the second end part 1-(n+1)f of the metal wire 1-(n+1), which is adjacent to the metal wire 1-n on the downstream side (upper side of the sheet in Fig. 3) of the direction in which the knitting of the metal wire 1-n proceeds (arrow L). For example, in Fig. 3, the first end part 1-1e of the metal wire 1-1 may be continuous with the second end part 1-2f of the metal wire 1-2; the first end part 1-2e of the metal wire 1-2 may be continuous with the second end part 1-3f of the metal wire 1-3; the first end part 1-3e of the metal wire 1-3 may be continuous with the second end part 1-4f of the metal wire 1-4; and the first end part 1-4e of the metal wire 1-4 may be continuous with the second end part 1-5f of the metal wire 1-5 (not shown). The wire net 10-cyl, which is cylindrical as a whole (see Figs. 5(A) and 5(B)), is also obtained by the process on the end parts according to such an embodiment. Such an embodiment makes it possible to knit the entire cylindrical wire net 10-cyl with the one continuous metal wire 1 (that may be the solid wire, and may be the stranded wire). The process on the end parts according to such an embodiment may be performed by, for example, using a knitting machine equipped with a cylindrical block. As described above, the planar wire net 10-pre2 (Figs. 5(C) and 5(D)), which is the two stacked unit layers 10-unit (see Fig. 3) in structure, is obtained by squashing the cylindrical wire net 10-cyl in the radial direction of the cylinder.

The wire net 10 having spring elasticity in the thickness direction thereof (see Fig. 2) is obtained by shaping the wire net 10-pre1 or 10-pre2 into a wave shape having an amplitude in the thickness direction thereof. A known means such as pressing with a mold of, for example, a corrugating roll may be used without particular limitations for shaping the planar wire net into the wave shape. Referring to Fig. 2 again, the wire net 10 is preferably shaped into the wave shape in such a way that the ridge parts (ridgelines) R, R, ... of this wave shape and the knitting direction of the wire net 10 (arrow W) cross each other in a plan view. Such a form makes it easy to maintain the wave shape for a long term.

The pitch A of the wave shape of the wire net 10 (space between adjacent ridge parts (ridgelines) R in a plan view of the wire net. See Fig. 2(A).) is preferably 10 to 30 mm, and more preferably 14 to 16 mm. The pitch A of the wave shape at the above upper limit or lower can cause the pressure at which the electrodes are pushed by the elastic mat to be more uniform over the entire faces of the electrodes. The pitch A of the wave shape at the above lower limit or higher makes it easy to give the wire net 10 spring elasticity in the thickness direction.

The resilience of the elastic mat 100 per unit area when the elastic mat 100 is subjected to 50% compressive deformation is preferably 100 to 450 gf/cm², and more preferably 150 to 300 gf/cm². The resilience of the elastic mat 100 per unit area when the elastic mat 100 is subjected to 50% compressive deformation at the above lower limit or higher makes it possible to, when the elastic mat 100 is used in an alkaline water electrolysis vessel, more stably maintain the zero-gap configuration even if the pressure inside the alkaline water electrolysis vessel changes, and to further increase the contact pressure at which the separating membrane is sandwiched between and pushed by the electrodes without impairing the uniformity of the contact pressure, to further increase the proportion of the zero-gap area in the electrode area, so that the energy efficiency can be further improved. The resilience of the elastic mat 100 per unit area when the elastic mat 100 is subjected to 50% compressive deformation at the above upper limit or lower makes it easy to further increase the repetitive resilience, to maintain sufficient resilience even in long-term use, and to keep the energy efficiency of the alkaline water electrolysis vessel high for a long term. In the present description, "50% compressive deformation" which the elastic mat is subjected to means that the elastic mat is compressively deformed in the thickness direction, so that the thickness thereof is 50% of the thickness thereof before the deformation.

When the 50% compressive deformation of the elastic mat 100 is repeated twice, the resilience of the elastic mat 100 per unit area in the second 50% compressive deformation is preferably no less than 40 gf/cm², and more preferably no less than 50 gf/cm². The resilience of the elastic mat 100 per unit area in the second 50% compressive deformation at the above lower limit or higher makes it easy to maintain the repetitive resilience for a longer term, and to keep the energy efficiency of the alkaline water electrolysis vessel high for a long term. In the present description, "the 50% compressive deformation (of the elastic mat) is repeated twice" means that after the first 50% compressive deformation, the compressive force applied to the elastic mat is taken off, so that the thickness of the elastic mat naturally recovers sufficiently, and thereafter the elastic mat is compressively deformed in the thickness direction again, so that the thickness thereof is 50% of the initial thickness (thickness before the first 50% compressive deformation).

In the present description, the method of measuring the resilience of the elastic mat per unit area in the first and the second 50% compressive deformations is as follows. Figs. 18 and 19 will be referred to. Fig. 18(A) is a schematically explanatory plan view of a metal container 90. Fig. 18(B) is a cross-sectional view taken along the line B-B in Fig. 18(A). The metal container 90 has a square bottom plate 91, a wall plate 92 protruding from the outer periphery of the bottom plate 91, and an inner space 93 of a cross section 150 mm square. The depth of the inner space 93 is at least 10 mm. The elastic mat is cut to have a shape 150 mm square to be used as a specimen 94. This specimen 94 is disposed on the bottom plate 91 of the metal container 90. Fig. 19(A) is a schematically explanatory cross-sectional view showing a state in which the specimen 94 is disposed on the bottom plate 91 in Fig. 18(B). A metal press plate 95 that is 150 mm square is gently lowered to the specimen 94 from above the metal container 90 as being kept parallel to the bottom plate 91 of the metal container 90. The resilience at the time point when the press plate is lowered, so that the thickness of the specimen 94 becomes 50% of the initial thickness tᵢₙᵢₜ (i.e., the resilience in the first 50% compressive deformation) is measured. The resilience per unit area in the first 50% compressive deformation can be obtained by dividing the measured resilience by the area of the specimen 94. Fig. 19(B) is a schematically explanatory cross-sectional view showing the positional relationship of the metal container 90, the specimen 94 and the press plate 95 before the press plate 95 is in contact with the specimen 94. Fig. 19(C) is a schematically explanatory cross-sectional view showing the positional relationship of the metal container 90, the specimen 94 and the press plate 95 at the time point when the press plate is lowered, so that the thickness of the specimen 94 becomes 50% of the initial thickness tᵢₙᵢₜ. In Fig. 19, the press plate 95 is held by a rod 96. Next, the press plate 95 is gently raised to a position sufficiently away from the bottom part of the metal container 90 by the initial thickness tᵢₙᵢₜ or more of the specimen, and it is waited that the shape of the specimen sufficiently recovers. Fig. 19(D) is a schematically explanatory cross-sectional view showing a state where the press plate 95 is raised and then the shape of the specimen 94 sufficiently recovers. In Fig. 19(D), the thickness of the specimen 94 recovers to the initial thickness tᵢₙᵢₜ. It is not always necessary that the thickness of the specimen 94 recovers to the initial thickness tᵢₙᵢₜ as long as recovering sufficiently. If the thickness of the specimen 94 does not recover to the initial thickness tᵢₙᵢₜ even after a sufficient time period (e.g., 10 minutes) has passed since the press plate 95 is raised, the second 50% compression test is subjected to the specimen as it is. After the shape of the specimen 94 recovers, the press plate is gently lowered again as being kept parallel to the bottom face inside the metal container. The resilience (that is, the resilience in the second 50% compressive deformation) at the time point when the press plate is lowered, so that the thickness of the specimen becomes 50% of the initial thickness tᵢₙᵢₜ (thickness before the first 50% compressive deformation) is measured. The resilience per unit area in the second 50% compressive deformation can be obtained by dividing the measured resilience by the area of the specimen 94. Fig. 19(E) is a schematically explanatory cross-sectional view showing the positional relationship of the metal container 90, the specimen 94 and the press plate 95 in the second 50% compressive deformation. A load cell is used for detecting the contact of the press plate with the specimen, and for measuring the resilience applied from the specimen to the press plate. In the entire process in the test, the press plate 95 is kept parallel to the bottom plate 91 of the metal container 90.

The thickness of the elastic mat 100 (thickness before the compression deformation) t (see Fig. 2) is preferably 7.5 to 10 mm. The thickness t of the elastic mat within the above range leads to the resilience of the elastic mat in the compressive deformation within a preferred range. In this description, the thickness of the elastic mat does not mean the thickness of the unit layer 10-unit of the wire net itself, but the maximum height of the elastic mat from the surface of a flat stand where the elastic mat is laid after the wire net is shaped into the wave shape (and is optionally stacked) to be the elastic mat.

An example in the above description on the present invention is the elastic mat 100 comprising the wire net 10 having a triangular wave shape in a plan view of the wire net 10 (see Fig. 2(A)). The present invention is not limited to this embodiment. For example, the elastic mat 100 can comprise a wire net having a sinusoidal wave shape, a sawtooth wave shape, a square wave shape, or the like. For example, these wave shapes may be distorted from ideal shapes of a sinusoidal wave etc. For example, the elastic mat can comprise a wire net having a distorted sinusoidal wave shape, a distorted triangular wave shape, a distorted sawtooth wave shape, a distorted square wave shape, or the like.

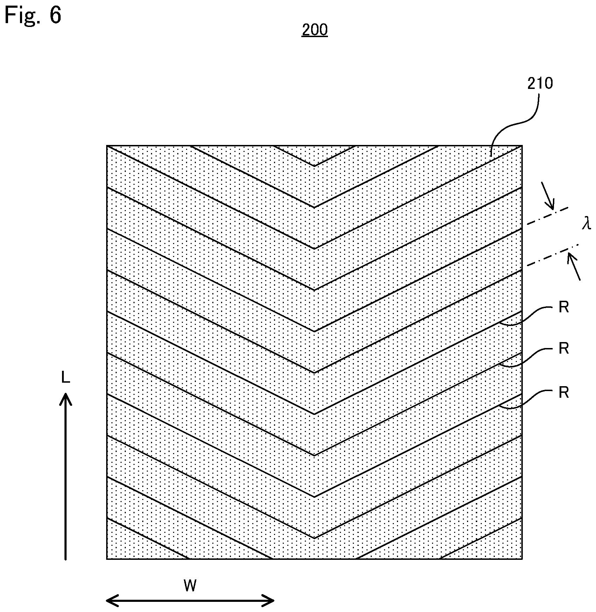

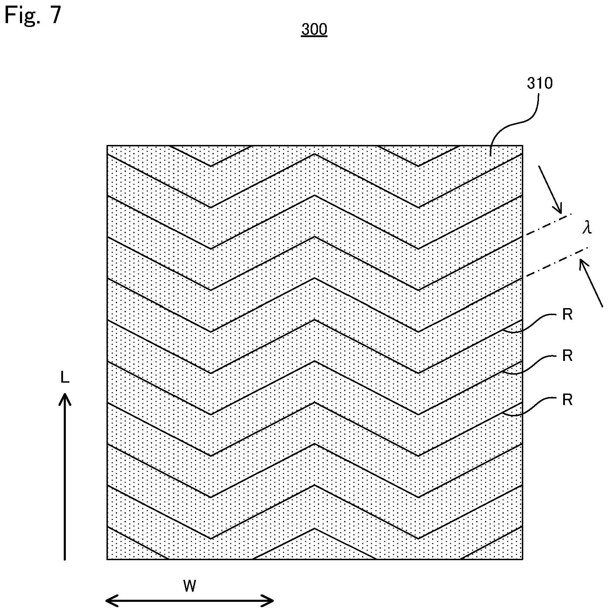

An example in the above description on the present invention is the elastic mat 100 comprising the wire net 10 having a wave shape including the linear ridge parts (ridgelines) R in a plan view of the wire net 10 (see Fig. 2(A)). The present invention is not limited to this embodiment. Figs. 6 and 7 are schematically explanatory plan views of elastic mats 200 and 300 for an alkaline water electrolysis vessel according to other embodiments (hereinafter may be referred to as "elastic mat 200" and "elastic mat 300"), respectively, and correspond to Fig. 2(A). In Figs. 6 and 7, the elements already shown in Figs. 2 to 5 are given the same reference signs as in Figs. 2 to 5, and the description thereof may be omitted. For example, the elastic mat 200 (Fig. 6) can comprise a wire net 210 having a wave shape including V-shaped ridge parts (ridgelines) R, R, ... in a plan view of the wire net 210. For example, the elastic mat 300 (Fig. 7) can comprise a wire net 310 having a wave shape including zigzag ridge parts (ridgelines) R, R, ... in a plan view of the wire net 310.

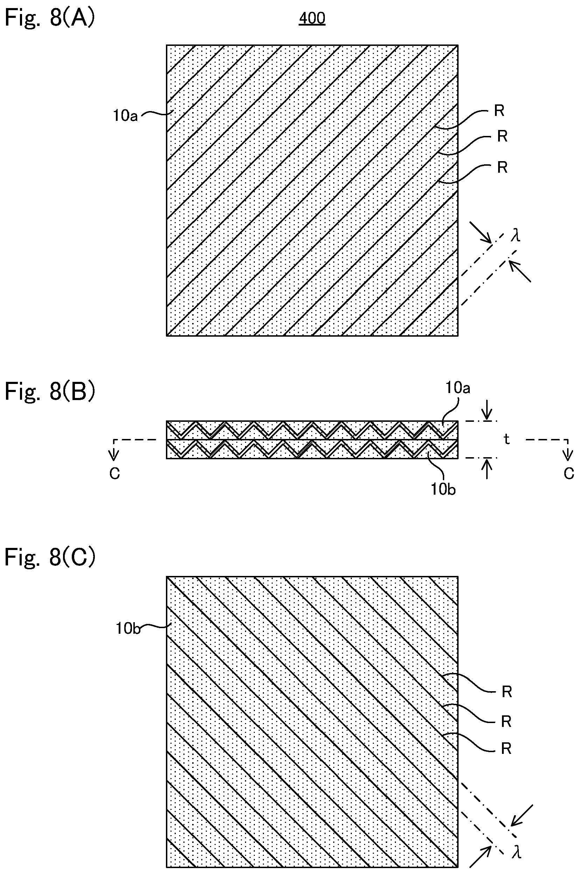

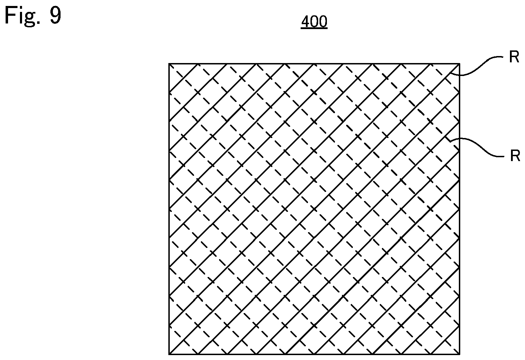

Examples in the above description on the present invention are the elastic mats 100, 200 and 300 each comprising one wire net. The present invention is not limited to these embodiments. For example, the elastic mat can comprise at least two stacked wire nets. Fig. 8 is a schematically explanatory view of an elastic mat 400 for an alkaline water electrolysis vessel according to such another embodiment (hereinafter may be referred to as "elastic mat 400"). In Fig. 8, the elements already shown in Figs. 2 to 7 are given the same reference signs as in Figs. 2 to 7, and the description thereof may be omitted. The elastic mat 400 has a structure of two stacked wire nets 10a and 10b. Fig. 8(A) is a plan view of the elastic mat 400 and only shows the wire net 10a on the upper layer side. Fig. 8(B) is a front view of the elastic mat 400, and shows both the wire net 10a on the upper layer side and the wire net 10b on the lower layer side. Fig. 8(C) is a cross-sectional view taken along the line C-C in Fig. 8(B), and only shows the wire net 10b on the lower layer side. The wire nets 10a and 10b are each the same as the above described wire net 10 except that the direction of the wire net 10b on the lower side is different from that of the wire net 10a on the upper layer side by 90° in a plan view. Fig. 9 is a transparent plan view of the elastic mat 400, and corresponds to Fig. 8(A). In Fig. 9, the elements already shown in Figs. 2 to 8 are given the same reference signs as in Figs. 2 to 8, and the description thereof may be omitted. In Fig. 9, hatching is omitted, and only the ridge parts (ridgelines) R, R, ... of the wire nets 10a and 10b are shown. In Fig. 9, the ridge parts (ridgelines) R, R, ... of the wire net 10a are shown by solid lines, and the ridge parts (ridgelines) R, R, ... of the wire net 10b are shown by dashed lines.

As shown in Figs. 8 and 9, in the elastic mat 400, the two adjacent wire nets 10a and 10b are stacked in such a way that the ridge parts (ridgelines) R, R, ... of the wave shape of one of the wire nets and the ridge parts (ridgelines) R, R, ... of the wave shape of the other wire net cross each other in a plan view. A plurality of the wire nets stacked in such a way that the ridge parts (ridgelines) of the wave shapes of each pair of two adjacent wire nets cross each other in a plan view as described above cause the valley parts V, V, ... (see Fig. 2(D)) of the wave shape of one wire net (wire net 10a on the upper layer side) to be supported by the ridge parts R, R, ... of the wave shape of the other wire net (wire net 10b on the lower layer side) in each pair. This makes it possible for the spring elasticity of the wire net on the upper layer side and the spring elasticity of the wire net on the lower layer side to act in series. Even if the wire net 10a on the upper layer side and the wire net 10b on the lower layer side shift from each other due to vibration or the like, the ridge parts (ridgelines) R, R, ... of the wave shape of the wire net 10b on the lower layer side are engaged with depressed portions on the back sides of the ridge parts (ridgelines) R, R, ... of the wave shape of the wire net 10a on the upper layer side, which makes it possible to suppress the ununiformity of the spring elasticity of the elastic mat 400 as a whole.

In the elastic mat 400, the adjacent wire nets 10a and 10b in a pair are joined at least along the periphery to be united into one body. For joining the adjacent wire nets in a pair, a known joining means such as welding, soldering, pinning, and binding with a resin wire or a metal wire may be used without particular limitations.

Concerning the elastic mat 400, a preferred thickness (thickness before the compression deformation) t (see Fig. 8(B)), preferred resilience per unit area in the 50% compression deformation and preferred resilience per unit area in the second 50% compression deformation when the 50% compression deformation is repeated twice, and a preferred pitch A of the wave shape of the wire net 10 are as described above concerning the elastic mat 100.

In view of pushing the electrodes by the elastic mat at a more uniform pressure over the entire faces of the electrodes in the alkaline water electrolysis vessel, the pitch A of the wave shape of the wire net (space between two adjacent ridge parts (ridgelines) R in a plan view of the wire net. See Figs. 2(A), 6, 7, 8(A) and 8(C).) is preferably as narrow as possible as long as the spring elasticity can be secured. However, it is not always easy to shape the wire net into a wave shape having both a narrow pitch A (wavelength) and a high amplitude. An elastic mat of a desired thickness can be obtained by stacking a plurality of the wire nets of a wave shape having a narrow pitch A and a relatively low amplitude as in the elastic mat 400, which makes it easy to narrow the pitch of the wave shape while a thick elastic mat is obtained, and to increase the repetitive resilience of the elastic mat to keep the energy efficiency of the alkaline water electrolysis vessel high for a long term. A plurality of the stacked wire nets also make it possible to obtain resilience that cannot be obtained from one wire net. In the elastic mat 400, a plurality of the same wire nets 10 are stacked. A plurality of wire nets each having different resilience may be stacked. The resilience of an elastic mat comprising a plurality of stacked wire nets each having different resilience can be unlimitedly adjusted.

Concerning the elastic mat 100, the thickness tᵤₙᵢₜ of the wire net 10 only is equal to the thickness t of the entire elastic mat 100. Concerning the elastic mat 400, the thickness tᵤₙᵢₜ of one wire net 10 only is equal to t/2 when t is defined as the thickness of the entire elastic mat 400. The ratio tᵤₙᵢₜ/λ (dimensionless number) of the thickness tᵤₙᵢₜ of the wire net only to the pitch A of the wave shape of this wire net is preferably 0.25 to 1.00, and more preferably 0.46 to 0.71. The ratio tᵤₙᵢₜ/λ at the above lower limit or higher makes it easy to increase the resilience of the elastic mat as a whole. The ratio tᵤₙᵢₜ/λ at the above upper limit or lower makes it easy to increase the repetitive resilience of the elastic mat.

An example in the above description on the present invention is the elastic mat 400 comprising a plurality of the stacked wire nets 10 having the linear ridge parts (ridgelines) R, R, ... in a plan view. The present invention is not limited to this embodiment. For example, the elastic mat can comprise a plurality of the stacked wire nets 210 having V-shaped ridge parts (ridgelines) R, R, ... in a plan view (Fig. 6), or a plurality of the stacked wire nets 310 having zigzag ridge parts (ridgelines) R, R, ... in a plan view (Fig. 7). Even in such a case, the wire nets are preferably stacked in such a way that the ridge parts (ridgelines) R, R, ... of the wave shape of one wire net and the ridge parts (ridgelines) R, R, ... of the wave shape of the other wire net cross each other in each pair of two adjacent wire nets.

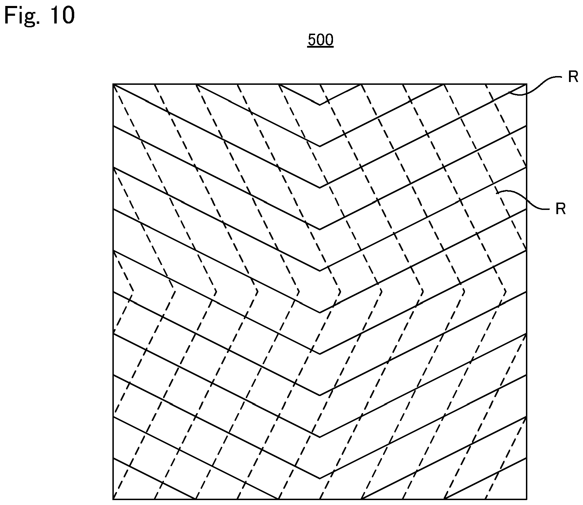

Fig. 10 is a transparent plan view of an elastic mat 500 for an alkaline water electrolysis vessel according to such another embodiment (hereinafter may be referred to as "elastic mat 500"), and corresponds to Fig. 9. In Fig. 10, the elements already shown in Figs. 2 to 9 are given the same reference signs as in Figs. 2 to 9, and the description thereof may be omitted. The elastic mat 500 is an elastic mat comprising the two stacked wire nets 210 (see Fig. 6). In Fig. 10, hatching is omitted, and only the ridge parts (ridgelines) R, R, ... of the wire nets 210, 210 are shown. In Fig. 10, the ridge parts (ridgelines) R, R, ... of one of the wire nets 210 are shown by solid lines, and the ridge parts (ridgelines) R, R, ... of the other wire net 210 are shown by dashed lines. As shown in Fig. 10, in the elastic mat 500, the two wire nets 210 that are disposed in such a way that the knitting directions thereof are different from each other are stacked, so that the ridge parts (ridgelines) R, R, ... of the wave shape of one wire net in the pair of the two adjacent wire nets 210, 210 and the ridge parts (ridgelines) R, R, ... of the wave shape of the other wire net cross each other in a plan view.

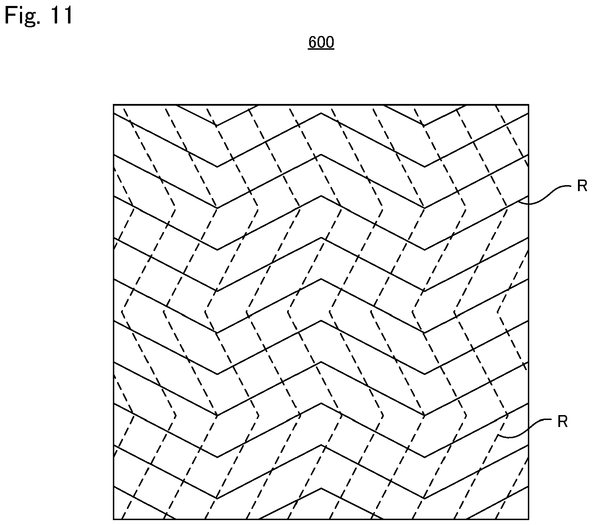

Fig. 11 is a transparent plan view of an elastic mat 600 for an alkaline water electrolysis vessel according to still another embodiment (hereinafter may be referred to as "elastic mat 600"), and corresponds to Fig. 9. In Fig. 11, the elements already shown in Figs. 2 to 10 are given the same reference signs as in Figs. 2 to 10, and the description thereof may be omitted. The elastic mat 600 is an elastic mat comprising the two stacked wire nets 310 (see Fig. 7). In Fig. 11, hatching is omitted, and only the ridge parts (ridgelines) R, R, ... of the wire nets 310, 310 are shown. In Fig. 11, the ridge parts (ridgelines) R, R, ... of one of the wire nets 310 are shown by solid lines, and the ridge parts (ridgelines) R, R, ... of the other wire net 310 are shown by dashed lines. As shown in Fig. 11, in the elastic mat 600, the two wire nets 310 that are disposed in such a way that the knitting directions thereof are different from each other are stacked, so that the ridge parts (ridgelines) R, R, ... of the wave shape of one wire net in the pair of the two adjacent wire nets 310, 310 and the ridge parts (ridgelines) R, R, ... of the wave shape of the other wire net cross each other in a plan view.

Examples in the above description on the present invention are the elastic mats 400, 500 and 600 each comprising the two stacked wire nets. The present invention is not limited to these embodiments. For example, the elastic mat can comprise at least three stacked wire nets. The number of the stacked wire nets can be preferably 2 to 8, and more preferably 2 to 4. Even in the elastic mat comprising at least three stacked wire nets, the wire nets are preferably stacked in such a way that the ridge parts (ridgelines) R, R, ... of the wave shape of one wire net and the ridge parts (ridgelines) R, R, ... of the wave shape of the other metal cross each other in each pair of two adjacent wire nets.

Examples in the above description on the present invention are the elastic mats 400, 500 and 600 each comprising a plurality of the stacked wire nets: adjacent wire nets in each pair are joined at least along the periphery to be united into one body. The present invention is not limited to these embodiments. For example, the elastic mat can comprise a plurality of stacked wire nets having the peripheries joined to and held by a flange part (described later) or a current collector (described later) of an electrolysis element, to be united into one body.

Examples in the above description on the present invention are the elastic mats 100, 200, 300, 400, 500 and 600 each comprising the wire nets 10, 210 or 310 with stockinette stitches with the metal wire. The present invention is not limited to these embodiments. For example, the elastic mat for an alkaline water electrolysis vessel can comprise a wire net being woven or knitted with a metal wire according to a weaving way or a knitting way other than the stockinette stitch. The weaving or the knitting way for weaving or knitting the wire net with a metal wire is not particularly limited as long as the wire net can have spring elasticity in the thickness direction thereof. Examples of such another weaving or knitting way include reverse stockinette stitch and rib stitch.

### <2. Alkaline Water Electrolysis Vessel>

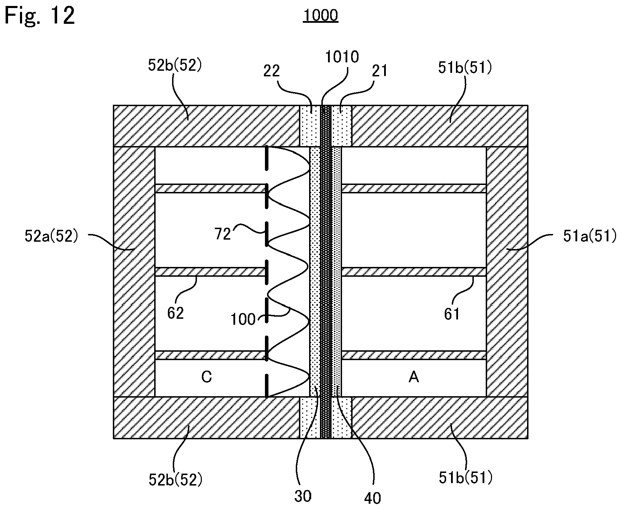

Fig. 12 is a schematically explanatory cross-sectional view of an alkaline water electrolysis vessel 1000 according to one embodiment of the present invention (hereinafter may be referred to as "electrolysis vessel 1000"). In Fig. 12, the elements already shown in Figs. 2 to 11 are given the same reference signs as in Figs. 2 to 11, and the description thereof may be omitted. The electrolysis vessel 1000 is an alkaline water electrolysis vessel comprising the above described elastic mat 100 for an alkaline water electrolysis vessel (see Fig. 2). As shown in Fig. 12, the electrolysis vessel 1000 includes an anode-side frame 51 having an electroconductive backside separating wall 51a, and a flange part 51b uniting with the entire periphery of the backside separating wall 51a so as to have watertightness, to define an anode chamber A; a cathode-side frame 52 having an electroconductive backside separating wall 52a, and a flange part 52b uniting with the entire periphery of the backside separating wall 52a so as to have watertightness, to define a cathode chamber C; an ion-permeable separating membrane 1010 arranged between the anode-side frame 51 and the cathode-side frame 52; gaskets 21 and 22 in a pair arranged between the separating membrane 1010 and the flange parts 51b of the anode-side frame 51, and between the separating membrane 1010 and the flange part 52b of the cathode-side frame 52, respectively, between which the periphery of the separating membrane 1010 is sandwiched; electroconductive ribs 61, 61, ... provided so as to protrude from the backside separating wall 51a of the anode-side frame 51 (hereinafter may be referred to as " electroconductive rib 61"); electroconductive ribs 62, 62, ... provided so as to protrude from the backside separating wall 52a of the cathode-side frame 52 (hereinafter may be referred to as "electroconductive rib 62"); a current collector 72 held by the electroconductive rib 62; the electroconductive elastic mat (first elastic mat) 100 (see Fig. 2) held by the current collector 72; a cathode (first electrode) 30 disposed between the elastic mat 100 and the separating membrane 1010; and an anode (second electrode) 40 held by the electroconductive rib 61. As described above, the electrolysis vessel 1000 includes the anode chamber A housing the anode 40 and generating oxygen gas, the cathode chamber C housing the cathode 30 and generating hydrogen gas, the ion-permeable separating membrane 1010 separating the anode chamber A and the cathode chamber C, and the first elastic mat 100 that is an elastic mat for an alkaline water electrolysis vessel according to the present invention. In the electrolysis vessel 1000, the cathode (first electrode) 30 is a flexible porous plate (first porous plate), and the anode (second electrode) 40 is a rigid porous plate (second porous plate).

In the electrolysis vessel 1000, the separating membrane 1010 is sandwiched between and pushed by the cathode (first electrode) 30 and the anode (second electrode) 40, that is, the zero-gap configuration is realized by pushing the cathode (first electrode) 30 toward the anode (second electrode) 40 by the elastic mat (first elastic mat) 100.

As the anode-side frame 51 and the cathode-side frame 52, any known frame used for an alkaline water electrolysis vessel may be used without particular limitations as long as capable of defining each of the anode chamber A and the cathode chamber C. The anode-side frame 51 has the electroconductive backside separating wall 51a, and the flange part 51b uniting with the entire periphery of the backside separating wall 51a so as to have watertightness. Likewise, the cathode-side frame 52 has the electroconductive backside separating wall 52a, and the flange part 52b uniting with the entire periphery of the backside separating wall 52a so as to have watertightness. The backside separating walls 51a and 52a separate adjacent electrolytic cells, and electrically connect the adjacent electrolytic cells in series. The flange part 51b, together with the backside separating wall 51a, the separating membrane 1010 and the gasket 21, defines the anode chamber. The flange part 52b, together with the backside separating wall 52a, the separating membrane 1010 and the gasket 22, defines the cathode chamber. The flange parts 51b and 52b have shapes corresponding to the gaskets 21 and 22, respectively. That is, when the gaskets 21 and 22 and the separating membrane 1010 are sandwiched between and held by the anode-side frame 51 and the cathode-side frame 52, the flange part 51b of the anode-side frame 51 is in contact with the gasket 21 without any gap, and the flange part 52b of the cathode-side frame 52 is in contact with the gasket 22 without any gap. The flange part 51b includes an anolyte supply flow path to supply an anolyte to the anode chamber A, and an anolyte collection flow path to collect the anolyte and gas generated at the anode from the anode chamber A, which are not shown in Fig. 12. The flange part 52b includes a catholyte supply flow path to supply a catholyte to the cathode chamber C, and a catholyte collection flow path to collect the catholyte and gas generated at the cathode from the cathode chamber C. As the material of the backside separating walls 51a and 52a, any alkali-resistant rigid electroconductive material may be used without particular limitations. Examples of such a material include simple metals such as nickel and iron; stainless steel such as SUS304, SUS310, SUS310S, SUS316 and SUS316L; and metal materials obtained by nickeling any of them. As the material of the flange parts 51b and 52b, any alkali-resistant rigid material may be used without particular limitations. Examples of such a material include simple metals such as nickel and iron; stainless steel such as SUS304, SUS310, SUS310S, SUS316, and SUS316L; metal materials obtained by nickeling any of them; and non-metal materials such as reinforced plastics. The backside separating wall 51a and the flange part 51b of the anode-side frame 51 may be joined to each other by welding, adhesion, or the like, and may be formed of the same material into one body. Likewise, the backside separating wall 52a and the flange part 52b of the cathode-side frame 52 may be joined to each other by welding, adhesion, or the like, and may be formed of the same material into one body. Fig. 12 shows a single electrolytic cell (electrolysis vessel 1000) only. However, the flange part 51b of the anode-side frame 51 may extend to the opposite side of the backside separating wall 51a (right side of the sheet of Fig. 12) as well, to define, together with the backside separating wall 51a, the cathode chamber of the neighboring electrolytic cell, and the flange part 52b of the cathode-side frame 52 may extend to the opposite side of the backside separating wall 52a (left side of the sheet of Fig. 12), to define, together with the backside separating wall 52a, the anode chamber of the neighboring electrolytic cell.

As the electroconductive rib 61 and the electroconductive rib 62, any known electroconductive rib used for an alkaline water electrolysis vessel may be used without particular limitations. In the electrolysis vessel 1000, the electroconductive rib 61 protrudes from the backside separating wall 51a of the anode-side frame 51, and the electroconductive rib 62 protrudes from the backside separating wall 52a of the cathode-side frame 52. The shape, number, and arrangement of the electroconductive rib 61 are not particularly limited as long as the anode 40 can be fixed to and held by the anode-side frame 51 by means of the electroconductive rib 61. The shape, number, and arrangement of the electroconductive rib 62 are not particularly limited either as long as the current collector 72 can be fixed to and held by the cathode-side frame 52 by means of the electroconductive rib 62. As the material of the electroconductive rib 61 and the electroconductive rib 62, any alkali-resistant rigid electroconductive material may be used without particular limitations. Examples of such a material include materials such as simple metals such as nickel and iron; stainless steel such as SUS304, SUS310, SUS310S, SUS316, and SUS316L; and metals obtained by nickeling any of them.

As the current collector 72, any known current collector used for an alkaline water electrolysis vessel may be used without particular limitations. For example, an expanded metal or punching metal made from an alkali-resistant rigid electroconductive material may be preferably employed. Examples of the material of the current collector 72 include simple metals such as nickel and iron; stainless steel such as SUS304, SUS310, SUS310S, SUS316, and SUS316L; and metals obtained by nickeling any of them. For holding the current collector 72 by means of the electroconductive rib 62, any known means such as welding and pinning may be employed without particular limitations.

The elastic mat 100 is as described above. For holding the elastic mat 100 by means of the current collector 72, any known means such as welding, pinning, and bolting may be employed without particular limitations.

As the separating membrane 1010, any known ion-permeable separating membrane used for a zero-gap alkaline water electrolysis vessel may be used without particular limitations. Desirably, the separating membrane 1010 has low gas permeability, low electric conductivity, and high strength. Examples of the separating membrane 1010 include ion-permeable porous membranes such as porous membranes formed of asbestos and/or modified asbestos, porous membranes using a polysulfone-based polymer, cloths using a polyphenylene sulfide fiber, fluorinated porous membranes, and porous membranes using a hybrid material that includes both inorganic and organic materials.

Any insulating gasket that may be used for an alkaline water electrolysis vessel may be used as the gaskets 21 and 22 without particular limitations. Fig. 12 shows cross sections of the gaskets 21 and 22. Each of the gaskets 21 and 22 has a flat shape. The periphery of the separating membrane 1010 is sandwiched between and held by the gaskets 21 and 22, and at the same time the gaskets 21 and 22 are sandwiched between and held by the flange part 51b of the anode-side frame 51 and the flange part 52b of the cathode-side frame 52. The gaskets 21 and 22 are preferably formed of an alkali-resistant elastomer. Examples of the material of the gaskets 21 and 22 include elastomers such as natural rubber (NR), styrene-butadiene rubber (SBR), polychloroprene (CR), butadiene rubber (BR), acrylonitrile-butadiene rubber (NBR), silicone rubber (SR), ethylene propylene rubber (EPT), ethylene propylene diene monomer rubber (EPDM), fluoro rubber (FR), isobutylene isoprene rubber (IIR), urethane rubber (UR), and chlorosulfonated polyethylene rubber (CSM). When a gasket material that is not alkali-resistant is used, a layer of an alkali-resistant material may be provided over the surface of the gasket material by coating or the like.

As the cathode (first electrode) 30, any known cathode for generating hydrogen which is used for a zero-gap alkaline water electrolysis vessel and is a flexible porous plate may be used without particular limitations. The cathode 30 usually includes an electroconductive base material, and a catalyst layer covering the surface of the base material. As the electroconductive base material of the cathode 30, for example, nickel, a nickel alloy, stainless steel, mild steel, a nickel alloy, nickeled stainless steel, or nickeled mild steel may be preferably employed. As the catalyst layer of the cathode 30, a coating formed of a noble metal oxide, nickel, cobalt, molybdenum, or manganese, or an oxide or a noble metal oxide thereof may be preferably employed. As the cathode 30 of a flexible porous plate, a porous plate including a flexible electroconductive base material (such as a wire net being woven (or knitted) with a metal wire, and a thin punching metal) and the above described catalyst layer may be used. The opening area of one pore of the cathode 30 of a flexible porous plate is preferably 0.05 to 2.0 mm², and more preferably 0.1 to 0.5 mm². The ratio of the pore opening area to the area of a current-carrying cross section of the cathode 30 of a flexible porous plate is preferably no less than 20%, and more preferably 20 to 50%. The bending flexibility of the cathode 30 of a flexible porous plate is preferably no less than 0.05 mm/g, and more preferably 0.1 to 0.8 mm/g. Bending flexibility in the present description is represented by a value obtained in such a way that: one side of a sample 10 mm square is fixed, so that the sample is horizontal, and a deflection (mm) of another side (end of the sample) that is opposite to the fixed side, when a given load is downwardly applied to the other side is divided by the load (g). That is, the bending flexibility is a parameter showing characteristics inverse to bending rigidity. For example, the bending flexibility may be adjusted by the material and thickness of the porous plate, and in the case of a wire net, by the way of weaving (or knitting) a metal wire constituting the wire net. The cathode 30 may be fixed to the current collector 72, and may be fixed to the elastic mat 100. For fixing the cathode 30 to the current collector 72 or the elastic mat 100, for example, any known means such as welding, pinning, and bolting may be employed without particular limitations. For example, one may tuck the periphery of the cathode 30 in the periphery end of the current collector 72 to fix the cathode 30. When fixed, the cathode 30 is preferably fixed, so that the resilience of the elastic mat 100 is not impaired.

As the anode (second electrode) 40, any known anode for generating oxygen which is used for a zero-gap alkaline water electrolysis vessel and is a rigid porous plate may be used without particular limitations. The anode 40 usually includes an electroconductive base material, and a catalyst layer covering the surface of the base material. The catalyst layer is preferably porous. As the electroconductive base material of the anode 40, for example, ferronickel, vanadium, molybdenum, copper, silver, manganese, a platinum group metal, graphite, or chromium, or any combination thereof may be used. In the anode 40, an electroconductive base material formed of nickel may be preferably used. The catalyst layer includes nickel as an element. The catalyst layer preferably includes nickel oxide, metallic nickel or nickel hydroxide, or any combination thereof, and may include an alloy of nickel and at least one other metal. The catalyst layer is especially preferably formed of metallic nickel. The catalyst layer may further include chromium, molybdenum, cobalt, tantalum, zirconium, aluminum, zinc, a platinum group metal, or a rare earth element, or any combination thereof. Rhodium, palladium, iridium, or ruthenium, or any combination thereof may be further supported on the surface of the catalyst layer as an additional catalyst. As the anode 40 of a rigid porous plate, a porous plate including a rigid electroconductive base material (such as an expanded metal) and the above described catalyst layer may be used. For holding the anode 40 by the electroconductive rib 61, any known means such as welding, pinning, and bolting may be employed without particular limitations.

In the electrolysis vessel 1000, the cathode 30 is pushed toward the anode 40 by the elastic mat 100 according to the present invention, which makes it possible to increase the contact pressure at which the separating membrane 1010 is sandwiched between and pushed by the anode 40 and the cathode 30 without impairing the uniformity of the contact pressure, to increase the proportion of the zero-gap area in the electrode area. This makes it possible to reduce the operating voltage to improve the energy efficiency.

In the electrolysis vessel 1000, the contact pressure at which the cathode (first electrode) 30 is pushed toward the anode (second electrode) 40 is preferably 100 to 450 gf/cm², and more preferably 150 to 300 gf/cm². The contact pressure at the above lower limit or higher makes it possible to more stably maintain the zero-gap configuration even if the pressure inside the electrolysis vessel changes, and to further reduce the operating voltage to further improve the energy efficiency. The contact pressure at the above upper limit or lower can lead to further increased repetitive resilience to maintain sufficient resilience even in long-term use, which makes it easy to keep the energy efficiency of the alkaline water electrolysis vessel high for a long term.

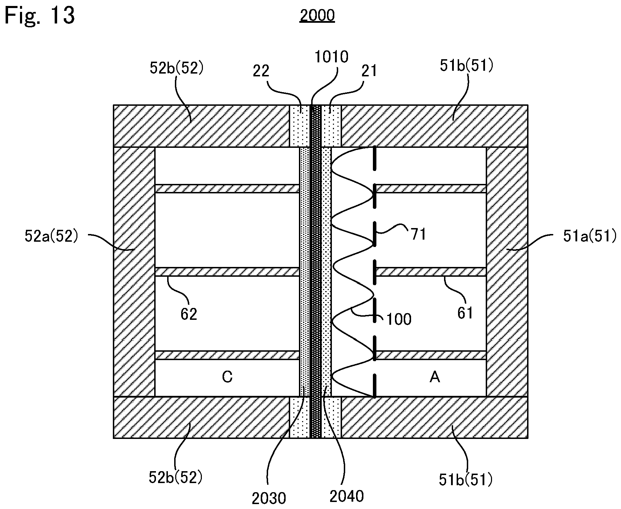

An example in the above description on the present invention is the alkaline water electrolysis vessel 1000 comprising the cathode (first electrode) 30 of a flexible porous plate which is pushed toward the anode (second electrode) 40 by the first elastic mat 100. The present invention is not limited to this embodiment. For example, the alkaline water electrolysis vessel can comprise the anode 40 of a flexible porous plate which is pushed toward the cathode 30 by the first elastic mat 100. Fig. 13 is a schematically explanatory cross-sectional view of an alkaline water electrolysis vessel 2000 according to such another embodiment of the present invention (hereinafter may be referred to as "electrolysis vessel 2000"). In Fig. 13, the elements already shown in Figs. 2 to 12 are given the same reference signs as in Figs. 2 to 12, and the description thereof may be omitted. As shown in Fig. 13, the electrolysis vessel 2000 includes the anode-side frame 51 having the electroconductive backside separating wall 51a, and the flange part 51b uniting with the entire periphery of the backside separating wall 51a so as to have watertightness, to define the anode chamber A; the cathode-side frame 52 having the electroconductive backside separating wall 52a, and the flange part 52b uniting with the entire periphery of the backside separating wall 52a so as to have watertightness, to define the cathode chamber C; the ion-permeable separating membrane 1010 arranged between the anode-side frame 51 and the cathode-side frame 52; the gaskets 21 and 22 in a pair arranged between the separating membrane 1010 and the flange part 51b of the anode-side frame 51, and between the separating membrane 1010 and the flange part 52b of the cathode-side frame 52, respectively, between which the periphery of the separating membrane 1010 is sandwiched; the electroconductive ribs 61, 61, ... provided so as to protrude from the backside separating wall 51a of the anode-side frame 51; the electroconductive ribs 62, 62, ... provided so as to protrude from the backside separating wall 52a of the cathode-side frame 52; a current collector 71 held by the electroconductive rib 61; the electroconductive elastic mat (first elastic mat) 100 (see Fig. 2) held by the current collector 71; an anode (first electrode) 2040 disposed between the elastic mat 100 and the separating membrane 1010; and a cathode (second electrode) 2030 held by the electroconductive rib 62. As described above, the electrolysis vessel 2000 includes the anode chamber A housing the anode 2040 and generating oxygen gas, the cathode chamber C housing the cathode 2030 and generating hydrogen gas, the ion-permeable separating membrane 1010 separating the anode chamber A and the cathode chamber C, and the first elastic mat 100 that is an elastic mat for an alkaline water electrolysis vessel according to the present invention. In the electrolysis vessel 2000, the anode (first electrode) 2040 is a flexible porous plate (first porous plate), and the cathode (second electrode) 2030 is a rigid porous plate (second porous plate).

In the electrolysis vessel 2000, the separating membrane 1010 is sandwiched between and pushed by the anode (first electrode) 2040 and the cathode (second electrode) 2030, that is, the zero-gap configuration is realized by pushing the anode (first electrode) 2040 toward the cathode (second electrode) 2030 by the elastic mat (first elastic mat) 100.

As the current collector 71, any known current collector used for an alkaline water electrolysis vessel may be used without particular limitations. For example, an expanded metal, punching metal or net made from an alkali-resistant rigid electroconductive material may be preferably employed. Examples of the material of the current collector 71 include simple metals such as nickel and iron; stainless steel such as SUS304, SUS310, SUS310S, SUS316, and SUS316L; and metals obtained by nickeling any of them. For holding the current collector 71 by means of the electroconductive rib 61, any known means such as welding and pinning may be employed without particular limitations.

The elastic mat 100 is as described above. For holding the elastic mat 100 by the current collector 71, any known means such as welding and pinning may be employed without particular limitations.

As the anode (first electrode) 2040, any known anode that is for alkaline water electrolysis same as the above-described anode 40, and is a flexible porous plate may be used without particular limitations. As the anode 2040 of a flexible porous plate, a porous plate including a flexible electroconductive base material (such as a wire net being woven (or knitted) with a metal wire, and a thin punching metal) and the above described catalyst layer may be used. The opening area of one pore of the anode 2040 of a flexible porous plate is preferably 0.05 to 2.0 mm², and more preferably 0.1 to 0.5 mm². The ratio of the pore opening area to the area of a current-carrying cross section of the anode 2040 of a flexible porous plate is preferably no less than 20%, and more preferably 20 to 50%. The bending flexibility of the anode 2040 of a flexible porous plate is preferably no less than 0.05 mm/g, and more preferably 0.1 to 0.8 mm/g. The anode 2040 may be fixed to the current collector 71, and may be fixed to the elastic mat 100. For fixing the anode 2040 to the current collector 71 or the elastic mat 100, for example, any known means such as welding, pinning, and bolting may be employed without particular limitations. For example, one may tuck the periphery of the anode 2040 in the periphery end of the current collector 71 to fix the anode 2040. When fixed, the anode 2040 is preferably fixed, so that the resilience of the elastic mat 100 is not impaired.

As the cathode (second electrode) 2030, any known cathode that is for alkaline water electrolysis same as the above described cathode 30, and is a rigid porous plate may be used without particular limitations. As the cathode 2030 of a rigid porous plate, a porous plate including a rigid electroconductive base material (such as an expanded metal) and the above described catalyst layer may be used. For holding the cathode 2030 by the electroconductive rib 62, any known means such as welding, pinning, and bolting may be employed without particular limitations.

In the electrolysis vessel 2000, the anode 2040 is pushed toward the cathode 2030 by the elastic mat 100 according to the present invention, which makes it possible to increase the contact pressure at which the separating membrane 1010 is sandwiched between and pushed by the anode 2040 and the cathode 2030 without impairing the uniformity of the contact pressure, to increase the proportion of the zero-gap area in the electrode area. This makes it possible to reduce the operating voltage to improve the energy efficiency.

In the electrolysis vessel 2000, the contact pressure at which the anode (first electrode) 2040 is pushed toward the cathode (second electrode) 2030 is preferably 100 to 450 gf/cm², and more preferably 150 to 300 gf/cm². The contact pressure at the above lower limit or higher makes it possible to more stably maintain the zero-gap configuration even if the pressure inside the electrolysis vessel changes, and to further reduce the operating voltage to further improve the energy efficiency. The contact pressure at the above upper limit or lower can lead to further increased repetitive resilience to maintain sufficient resilience even in long-term use, which makes it easy to keep the energy efficiency of the alkaline water electrolysis vessel high for a long term.

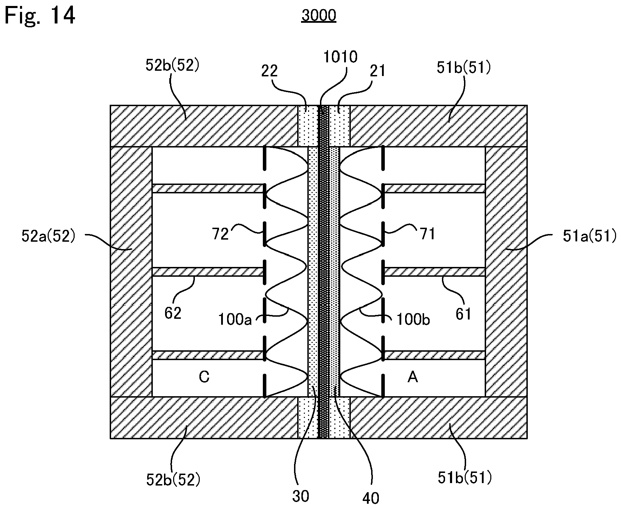

Examples in the above description on the present invention are the alkaline water electrolysis vessel 1000 comprising the second electrode (anode) 40 of a rigid porous plate, which is held by the electroconductive rib 61, and the alkaline water electrolysis vessel 2000 comprising the second electrode (cathode) 2030 of a rigid porous plate, which is held by the electroconductive rib 62. The present invention is not limited to these embodiments. For example, the alkaline water electrolysis vessel can comprise the second electrode of a rigid porous plate which is pushed toward the first electrode by a second elastic mat that is an elastic mat for an alkaline water electrolysis vessel according to the present invention. Fig. 14 is a schematically explanatory cross-sectional view of an alkaline water electrolysis vessel 3000 according to such another embodiment (hereinafter may be referred to as "electrolysis vessel 3000"). In Fig. 14, the same elements as those already shown in Figs. 2 to 13 are given the same reference signs as in Figs. 2 to 13, and the description thereof may be omitted. As shown in Fig. 14, the electrolysis vessel 3000 includes the anode-side frame 51 having the electroconductive backside separating wall 51a, and the flange part 51b uniting with the entire periphery of the backside separating wall 51a so as to have watertightness, to define the anode chamber A; the cathode-side frame 52 having the electroconductive backside separating wall 52a, and the flange part 52b uniting with the entire periphery of the backside separating wall 52a so as to have watertightness, to define the cathode chamber C; the ion-permeable separating membrane 1010 arranged between the anode-side frame 51 and the cathode-side frame 52; the gaskets 21 and 22 in a pair arranged between the separating membrane 1010 and the flange part 51b of the anode-side frame 51, and between the separating membrane 1010 and the flange part 52b of the cathode-side frame 52, respectively, between which the periphery of the separating membrane 1010 is sandwiched; the electroconductive ribs 61, 61, ... provided so as to protrude from the backside separating wall 51a of the anode-side frame 51; the electroconductive ribs 62, 62, ... provided so as to protrude from the backside separating wall 52a of the cathode-side frame 52; the current collector 72 held by the electroconductive rib 62; an electroconductive elastic mat (first elastic mat) 100a held by the current collector 72; the cathode (first electrode) 30 disposed between the first elastic mat 100a and the separating membrane 1010; the current collector 71 held by the electroconductive rib 61; an electroconductive elastic mat (second elastic mat) 100b held by the current collector 71; and the anode (second electrode) 40 disposed between the second elastic mat 100b and the separating membrane 1010. The first elastic mat 100a and the second elastic mat 100b are each the same as the above described elastic mat 100 for an alkaline water electrolysis vessel according to the present invention (see Fig. 2). As described above, the electrolysis vessel 3000 includes the anode chamber A housing the anode 40 and generating oxygen gas, the cathode chamber C housing the cathode 30 and generating hydrogen gas, the ion-permeable separating membrane 1010 separating the anode chamber A and the cathode chamber C, the first elastic mat 100a that is an elastic mat for an alkaline water electrolysis vessel according to the present invention, and the second elastic mat 100b that is an elastic mat for an alkaline water electrolysis vessel according to the present invention.

In the electrolysis vessel 3000, the cathode (first electrode) 30 is a flexible porous plate (first porous plate). The cathode 30 may be fixed to the current collector 72, and may be fixed to the first elastic mat 100a. For fixing the cathode 30 to the current collector 72 or the first elastic mat 100a, for example, any known means such as welding, pinning, and bolting may be employed without particular limitations. For example, one may tuck the periphery of the cathode 30 in the periphery end of the current collector 72 to fix the cathode 30. When fixed, the cathode 30 is preferably fixed, so that the resilience of the elastic mat 100a is not impaired.

In the electrolysis vessel 3000, the anode (second electrode) 40 may be a rigid porous plate, and may be a flexible porous plate (second porous plate). Preferably, the anode 40 is a rigid porous plate. The anode 40 of a flexible porous plate may be fixed to the current collector 71, and may be fixed to the second elastic mat 100b. The anode 40 of a rigid porous plate can be fixed to the second elastic mat 100b. For fixing the anode 40 to the current collector 71 or the second elastic mat 100b, for example, any known means such as welding, pinning, and bolting may be employed without particular limitations. For example, one may tuck the periphery of the anode 40 in the periphery end of the current collector 71 to fix the anode 40. When fixed, the anode 40 is preferably fixed, so that the resilience of the elastic mat 100b is not impaired.

In the electrolysis vessel 3000, the separating membrane 1010 is sandwiched between and pushed by the cathode (first electrode) 30 and the anode (second electrode) 40, that is, the zero-gap configuration is realized by pushing the cathode (first electrode) 30 toward the anode (second electrode) 40 by the first elastic mat 100a, and pushing the anode (second electrode) 40 toward the cathode (second electrode) 30 by the second elastic mat 100b.

According to the electrolysis vessel 3000, the separating membrane 1010 receives the pressure from both the elastic mats on the anode side and the cathode side, which makes it easy to suppress deformation of the separating membrane 1010 in the vicinity of the periphery of the electrodes.

In the electrolysis vessel 3000, the cathode (first electrode) 30 is pushed toward the anode (second electrode) 40 by the elastic mat (first elastic mat) 100a according to the present invention, and the anode (second electrode) 40 is pushed toward the cathode (first electrode) 30 by the elastic mat (second elastic mat) 100b according to the present invention, which make it possible to increase the contact pressure at which the separating membrane 1010 is sandwiched between and pushed by the anode 40 and the cathode 30 without impairing the uniformity of the contact pressure, to increase the proportion of the zero-gap area in the electrode area. This makes it possible to reduce the operating voltage to improve the energy efficiency.

In the electrolysis vessel 3000, the contact pressure at which the cathode (first electrode) 30 is pushed toward the anode (second electrode) 40, and the contact pressure at which the anode (second electrode) 40 is pushed toward the cathode (first electrode) 30 is each preferably 50 to 225 gf/cm², and more preferably 75 to 150 gf/cm². The respective contact pressures at the above lower limits or higher make it possible to further reduce the operating voltage to further increase the energy efficiency. The respective contact pressures at the above upper limits or lower can lead to further increased repetitive resilience to maintain sufficient resilience even in long-term use, which makes it easy to keep the energy efficiency of the alkaline water electrolysis vessel high for a long term.

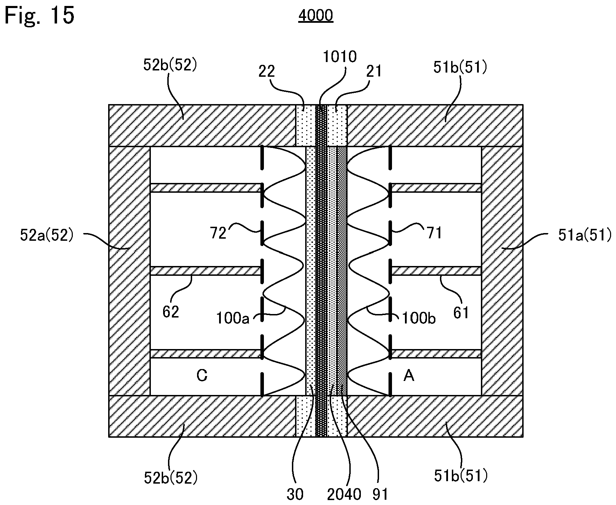

Examples in the above description on the present invention are the alkaline water electrolysis vessels 1000, 2000 and 3000 each comprising the first electrode of a flexible porous plate and/or the second electrode of a rigid porous plate. The present invention is not limited to these embodiments. For example, the alkaline water electrolysis vessel can comprise the first electrode of a flexible porous plate, and the second electrode of a flexible porous plate as well. Fig. 15 is a schematically explanatory cross-sectional view of an alkaline water electrolysis vessel 4000 according to such another embodiment (hereinafter may be referred to as "electrolysis vessel 4000"). In Fig. 15, the elements already shown in Figs. 2 to 14 are given the same reference signs as in Figs. 2 to 14, and the description thereof may be omitted. As shown in Fig. 15, the electrolysis vessel 4000 includes the anode-side frame 51 having the electroconductive backside separating wall 51a, and the flange part 51b uniting with the entire periphery of the backside separating wall 51a so as to have watertightness, to define the anode chamber A; the cathode-side frame 52 having the electroconductive backside separating wall 52a, and the flange part 52b uniting with the entire periphery of the backside separating wall 52a so as to have watertightness, to define the cathode chamber C; the ion-permeable separating membrane 1010 arranged between the anode-side frame 51 and the cathode-side frame 52; the gaskets 21 and 22 in a pair arranged between the separating membrane 1010 and the flange part 51b of the anode-side frame 51, and between the separating membrane 1010 and the flange part 52b of the cathode-side frame 52, respectively, between which the periphery of the separating membrane 1010 is sandwiched; the electroconductive ribs 61, 61, ... provided so as to protrude from the backside separating wall 51a of the anode-side frame 51; the electroconductive ribs 62, 62, ... provided so as to protrude from the backside separating wall 52a of the cathode-side frame 52; the current collector 72 held by the electroconductive rib 62; the electroconductive elastic mat (first elastic mat) 100a held by the current collector 72; the cathode (first electrode) 30 disposed between the first elastic mat 100a and the separating membrane 1010; the current collector 71 held by the electroconductive rib 61; the electroconductive elastic mat (second elastic mat) 100b held by the current collector 71; the anode (second electrode) 2040 disposed between the second elastic mat 100b and the separating membrane 1010; and an electroconductive rigid current collector 91 that is disposed between the second elastic mat 100b and the anode (second electrode) 2040 and is in contact with the anode 2040. As described above, the electrolysis vessel 4000 includes the anode chamber A housing the anode 2040 and generating oxygen gas, the cathode chamber C housing the cathode 30 and generating hydrogen gas, the ion-permeable separating membrane 1010 separating the anode chamber A and the cathode chamber C, the first elastic mat 100a that is an elastic mat for an alkaline water electrolysis vessel according to the present invention, and the second elastic mat 100b that is an elastic mat for an alkaline water electrolysis vessel according to the present invention.

In the electrolysis vessel 4000, the cathode (first electrode) 30 is a flexible porous plate (first porous plate). The cathode 30 may be fixed to the current collector 72, and may be fixed to the first elastic mat 100a. For fixing the cathode 30 to the current collector 72 or the first elastic mat 100a, for example, any known means such as welding, pinning, and bolting may be employed without particular limitations. For example, one may tuck the periphery of the cathode 30 in the periphery end of the current collector 72 to fix the cathode 30. When fixed, the cathode 30 is preferably fixed, so that the resilience of the elastic mat 100a is not impaired.

In the electrolysis vessel 4000, the anode (second electrode) 2040 is a flexible porous plate (second porous plate), and is fixed to the rigid current collector 91. For fixing the anode 2040 to the rigid current collector 91, for example, any known means such as welding, pinning, and bolting may be employed without particular limitations. For example, one may tuck the periphery of the anode 2040 in the periphery end of the current collector 71 to fix the anode 2040. When fixed, the anode 2040 is preferably fixed, so that the resilience of the elastic mat 100b is not impaired.

In the electrolysis vessel 4000, the separating membrane 1010 is sandwiched between and pushed by the cathode (first electrode) 30 and the anode (second electrode) 2040, that is, the zero-gap configuration is realized by pushing the cathode (first electrode) 30 toward the anode (second electrode) 2040 by the first elastic mat 100a, and pushing the anode (second electrode) 2040 toward the cathode (first electrode) 30 by the second elastic mat 100b, wherein the rigid current collector 91 is arranged between the anode 2040 and the second elastic mat 100b.

In the electrolysis vessel 4000, the rigid current collector 91 is disposed, so that the second electrode (anode) 2040 is sandwiched between the rigid current collector 91 and the separating membrane 1010. The second electrode (anode) 2040 is supported by the rigid current collector 91. As the rigid current collector 91, any known electroconductive rigid current collector may be used. For example, an expanded metal or punching metal made from an alkali-resistant rigid electroconductive material may be preferably employed. Examples of the material of the rigid current collector 91 include simple metals such as nickel and iron; stainless steel such as SUS304, SUS310, SUS310S, SUS316, and SUS316L; and metals obtained by nickeling any of them. The rigid current collector 91 may be, but is not necessarily, held by the elastic mat 100b. For holding the rigid current collector 91 by the second elastic mat 100b, any known means such as welding, pinning, and bolting may be employed without particular limitations.

According to the electrolysis vessel 4000, the second elastic mat 100b pushes the anode 2040, wherein the rigid current collector 91 is arranged between the second elastic mat 100b and the anode 2040 (that is, the second electrode 2040 is supported by the rigid current collector 91 from the back), which can cause the pressure at which both the electrodes are pushed toward the separating membrane 1010 to be more uniform over the entire faces of the electrodes even when the second electrode 2040 is flexible, and thus can cause the current density to be more uniform. The separating membrane 1010 receives the pressure from both the elastic bodies on the anode side and the cathode side, which makes it easy to suppress deformation of the separating membrane 1010 in the vicinity of the periphery of the electrodes.

In the electrolysis vessel 4000, the cathode (first electrode) 30 is pushed toward the anode (second electrode) 2040 by the elastic mat (first elastic mat) 100a according to the present invention, and the anode (second electrode) 2040 is pushed toward the cathode (first electrode) 30 by the elastic mat (second elastic mat) 100b according to the present invention, wherein the rigid current collector 91 is arranged between the anode 2040 and the elastic mat 100b, which makes it possible to increase the contact pressure at which the separating membrane 1010 is sandwiched between and pushed by the anode 2040 and the cathode 30 without impairing the uniformity of the contact pressure, to increase the proportion of the zero-gap area in the electrode area. This makes it possible to reduce the operating voltage to improve the energy efficiency.

In the electrolysis vessel 4000, the contact pressure at which the cathode (first electrode) 30 is pushed toward the anode (second electrode) 2040, and the contact pressure at which the anode (second electrode) 2040 is pushed toward the cathode (first electrode) 30 is each preferably 50 to 225 gf/cm², and more preferably 75 to 150 gf/cm². The respective contact pressures at the above lower limits or higher make it possible to further reduce the operating voltage to further improve the energy efficiency. The respective contact pressures at the above upper limits or lower can lead to further increased repetitive resilience to maintain sufficient resilience even in long-term use, which makes it easy to keep the energy efficiency of the alkaline water electrolysis vessel high for a long term.

An example in the above description on the present invention is the alkaline water electrolysis vessel 4000 comprising the current collector 71 supported by the electroconductive rib 61, the second elastic mat 100b supported by the current collector 71, and the rigid current collector 91 supported by the second elastic mat 100b. The present invention is not limited to this embodiment. For example, the electrolysis vessel 4000 can be an alkaline water electrolysis vessel not comprising the second elastic mat 100b, but comprising the rigid current collector 91 supported by the current collector 71. For example, the electrolysis vessel 4000 can be an alkaline water electrolysis vessel not comprising the second elastic mat 100b or the current collector 71, but comprising the rigid current collector 91 directly supported by the electroconductive rib 61.

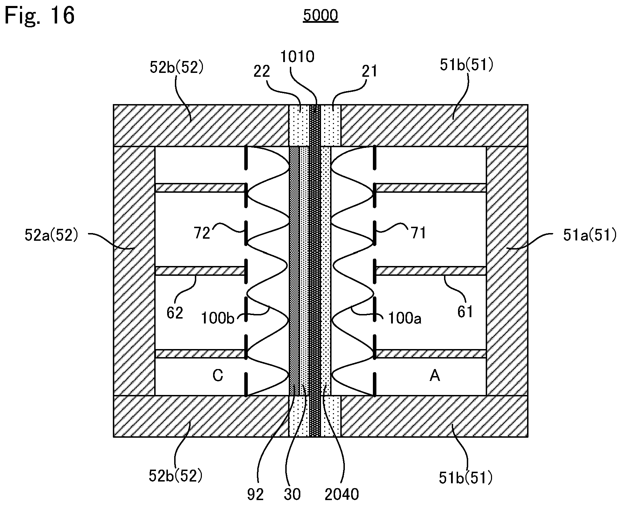

An example in the above description on the present invention is the alkaline water electrolysis vessel 4000 comprising the second elastic mat 100b pushing the anode 2040 toward the cathode 30, wherein the rigid current collector 91 is arranged between the anode 2040 and the second elastic mat 100b. The present invention is not limited to this embodiment. For example, the alkaline water electrolysis vessel can comprise the second elastic mat pushing the cathode toward the anode, wherein the rigid current collector is arranged between the cathode and the second elastic mat. Fig. 16 is a schematically explanatory cross-sectional view of an alkaline water electrolysis vessel 5000 according to such another embodiment (hereinafter may be referred to as "electrolysis vessel 5000"). In Fig. 16, the elements already shown in Figs. 2 to 15 are given the same reference signs as in Figs. 2 to 15, and the description thereof may be omitted. As shown in Fig. 16, the electrolysis vessel 5000 includes the anode-side frame 51 having the electroconductive backside separating wall 51a, and the flange part 51b uniting with the entire periphery of the backside separating wall 51a so as to have watertightness, to define the anode chamber A; the cathode-side frame 52 having the electroconductive backside separating wall 52a, and the flange part 52b uniting with the entire periphery of the backside separating wall 52a so as to have watertightness, to define the cathode chamber C; the ion-permeable separating membrane 1010 arranged between the anode-side frame 51 and the cathode-side frame 52; the gaskets 21 and 22 in a pair arranged between the separating membrane 1010 and the flange part 51b of the anode-side frame 51, and between the separating membrane 1010 and the flange part 52b of the cathode-side frame 52, respectively, between which the periphery of the separating membrane 1010 is sandwiched; the electroconductive ribs 61, 61, ... provided so as to protrude from the backside separating wall 51a of the anode-side frame 51; the electroconductive ribs 62, 62, ... provided so as to protrude from the backside separating wall 52a of the cathode-side frame 52; the current collector 71 held by the electroconductive rib 61; the electroconductive elastic mat (first elastic mat) 100a held by the current collector 71; the anode (first electrode) 2040 disposed between the first elastic mat 100a and the separating membrane 1010; the current collector 72 held by the electroconductive rib 62; the electroconductive elastic mat (second elastic mat) 100b held by the current collector 72; the cathode (second electrode) 30 disposed between the second elastic mat 100b and the separating membrane 1010; and an electroconductive rigid current collector 92 that is disposed between the second elastic mat 100b and the cathode (second electrode) 30 and is in contact with the cathode 30. As described above, the electrolysis vessel 5000 includes the anode chamber A housing the anode 2040 and generating oxygen gas, the cathode chamber C housing the cathode 30 and generating hydrogen gas, the ion-permeable separating membrane 1010 separating the anode chamber A and the cathode chamber C, the first elastic mat 100a that is an elastic mat for an alkaline water electrolysis vessel according to the present invention, and the second elastic mat 100b that is an elastic mat for an alkaline water electrolysis vessel according to the present invention.

In the electrolysis vessel 5000, the anode (first electrode) 2040 is a flexible porous plate (first porous plate). The anode 2040 may be fixed to the current collector 71, and may be fixed to the first elastic mat 100a. For fixing the anode 2040 to the current collector 71 or the first elastic mat 100a, for example, any known means such as welding, pinning, and bolting may be employed without particular limitations. For example, one may tuck the periphery of the anode 2040 in the periphery end of the current collector 71 to fix the periphery of the anode 2040. When fixed, the anode 2040 is preferably fixed so that the resilience of the elastic mat 100a is not impaired.

In the electrolysis vessel 5000, the cathode (second electrode) 30 is a flexible porous plate (second porous plate), and is fixed to the rigid current collector 92. For fixing the cathode 30 to the rigid current collector 92, for example, any known means such as welding, pinning, and bolting may be employed without particular limitations. For example, one may tuck the periphery of the cathode 30 in the periphery end of the current collector 72 to fix the cathode 30. When fixed, the cathode 30 is preferably fixed so that the resilience of the elastic mat 100b is not impaired.

In the electrolysis vessel 5000, the separating membrane 1010 is sandwiched between and pushed by the anode (first electrode) 2040 and the cathode (second electrode) 30, that is, the zero-gap configuration is realized by pushing the anode (first electrode) 2040 toward the cathode (second electrode) 30 by the first elastic mat 100a, and pushing the cathode (second electrode) 30 toward the anode (first electrode) 2040 by the second elastic mat 100b, wherein the rigid current collector 92 is arranged between the cathode 30 and the second elastic mat 100b.

In the electrolysis vessel 5000, the rigid current collector 92 is disposed, so that the second electrode (cathode) 30 is sandwiched between the rigid current collector 92 and the separating membrane 1010. The second electrode (cathode) 30 is supported by the rigid current collector 92. As the rigid current collector 92, any known electroconductive rigid current collector may be used. For example, an expanded metal or punching metal made from an alkali-resistant rigid electroconductive material may be preferably employed. Examples of the material of the rigid current collector 92 include simple metals such as nickel and iron; stainless steel such as SUS304, SUS310, SUS310S, SUS316, and SUS316L; and metals obtained by nickeling any of them. The rigid current collector 92 may be, but is not necessarily, held by the elastic mat 100b. For holding the rigid current collector 92 by the second elastic mat 100b, any known means such as welding, pinning, and bolting may be employed without particular limitations.

According to the electrolysis vessel 5000, the second elastic mat 100b pushes the second electrode 30, wherein the rigid current collector 92 is arranged between the second electrode 30 and the second elastic mat 100b (that is, the second electrode 30 is supported by the rigid current collector 92 from the back), which can cause the pressure at which both the electrodes are pushed toward the separating membrane 1010 to be more uniform over the entire faces of the electrodes even when the second electrode 30 is flexible, and thus can cause the current density to be more uniform. The separating membrane 1010 receives the pressure from both the elastic bodies on the anode side and the cathode side, which makes it easy to suppress deformation of the separating membrane 1010 in the vicinity of the periphery of the electrodes.

In the electrolysis vessel 5000, the anode (first electrode) 2040 is pushed toward the cathode (second electrode) 30 by the elastic mat (first elastic mat) 100a according to the present invention, and the cathode (second electrode) 30 is pushed toward the anode (first electrode) 2040 by the elastic mat (second elastic mat) 100b according to the present invention, wherein the rigid current collector 92 is arranged between the cathode 30 and the elastic mat 100b, which makes it possible to increase the contact pressure at which the separating membrane 1010 is sandwiched between and pushed by the anode 2040 and the cathode 30 without impairing the uniformity of the contact pressure, to increase the proportion of the zero-gap area in the electrode area. This makes it possible to reduce the operating voltage to improve the energy efficiency.

In the electrolysis vessel 5000, the contact pressure at which the anode (first electrode) 2040 is pushed toward the cathode (second electrode) 30, and the contact pressure at which the cathode (second electrode) 30 is pushed toward the anode (first electrode) 2040, wherein the rigid current collector 92 is arranged between the cathode 30 and the second elastic mat 100b is each preferably 50 to 225 gf/cm², and more preferably 75 to 150 gf/cm². The respective contact pressures at the above lower limits or higher make it possible to further reduce the operating voltage to further improve the energy efficiency. The respective contact pressures at the above upper limits or lower can lead to further increased repetitive resilience to maintain sufficient resilience even in long-term use, which makes it easy to keep the energy efficiency of the alkaline water electrolysis vessel high for a long term.

An example in the above description on the present invention is the alkaline water electrolysis vessel 5000 comprising the current collector 72 supported by the electroconductive rib 62, the second elastic mat 100b supported by the current collector 72, and the rigid current collector 92 supported by the second elastic mat 100b. The present invention is not limited to this embodiment. For example, the electrolysis vessel 5000 can be an alkaline water electrolysis vessel not comprising the second elastic mat 100b, but comprising the rigid current collector 92 supported by the current collector 72. For example, the electrolysis vessel 5000 can be an alkaline water electrolysis vessel not comprising the second elastic mat 100b or the current collector 72, but comprising the rigid current collector 92 directly supported by the electroconductive rib 62.

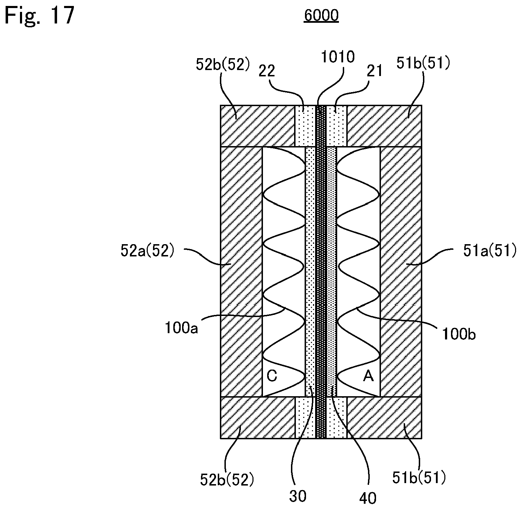

Examples in the above description on the present invention are the alkaline water electrolysis vessels 1000 to 5000 each comprising the electroconductive rib 61 in the anode chamber, and the electroconductive rib 62 in the cathode chamber. The present invention is not limited to these embodiments. For example, the alkaline water electrolysis vessel can comprise no electroconductive rib in one or both of the anode chamber and the cathode chamber. Fig. 17 is a schematically explanatory cross-sectional view of an alkaline water electrolysis vessel 6000 according to such another embodiment (hereinafter may be referred to as "electrolysis vessel 6000"). In Fig. 17, the elements already shown in Figs. 2 to 16 are given the same reference signs as in Figs. 2 to 16, and the description thereof may be omitted. As shown in Fig. 17, the electrolysis vessel 6000 includes the anode-side frame 51 having the electroconductive backside separating wall 51a, and the flange part 51b uniting with the entire periphery of the backside separating wall 51a so as to have watertightness, to define the anode chamber A; the cathode-side frame 52 having the electroconductive backside separating wall 52a, and the flange part 52b uniting with the entire periphery of the backside separating wall 52a so as to have watertightness, to define the cathode chamber C; the ion-permeable separating membrane 1010 arranged between the anode-side frame 51 and the cathode-side frame 52; the gaskets 21 and 22 in a pair arranged between the separating membrane 1010 and the flange part 51b of the anode-side frame 51, and between the separating membrane 1010 and the flange part 52b of the cathode-side frame 52, respectively, between which the periphery of the separating membrane 1010 is sandwiched; the cathode (first electrode) 30 disposed in the cathode chamber C so as to be in contact with the separating membrane 1010; the electroconductive elastic mat (first elastic mat) 100a disposed between the backside separating wall 52a of the cathode-side frame 52 and the cathode 30 so as to be in contact with the backside separating wall 52a and the cathode 30; the anode (second electrode) 40 disposed in the anode chamber A so as to be in contact with the separating membrane 1010; and the electroconductive elastic mat (second elastic mat) 100b disposed between the backside separating wall 51a of the anode-side frame 51 and the anode 40 so as to be in contact with the backside separating wall 51a and the anode 40. As described above, the electrolysis vessel 6000 includes the anode chamber A housing the anode 40 and generating oxygen gas, the cathode chamber C housing the cathode 30 and generating hydrogen gas, the ion-permeable separating membrane 1010 separating the anode chamber A and the cathode chamber C, the first elastic mat 100a that is an elastic mat for an alkaline water electrolysis vessel according to the present invention, and the second elastic mat 100b that is an elastic mat for an alkaline water electrolysis vessel according to the present invention.

In the electrolysis vessel 6000, the cathode (first electrode) 30 is a flexible porous plate (first porous plate). The cathode 30 can be fixed to the backside separating wall 52a or the first elastic mat 100a. For fixing the cathode 30 to the backside separating wall 52a or the first elastic mat 100a, for example, any known means such as welding, pinning, and bolting may be employed without particular limitations. For example, one may provide a hook (hooked member) at the surface of the inside of the backside separating wall 52a, and fit the cathode 30 to the hook, to fix the cathode 30 to the backside separating wall 52a. When fixed, the cathode 30 is preferably fixed, so that the resilience of the elastic mat 100a is not impaired.

In the electrolysis vessel 6000, the anode (second electrode) 40 may be a rigid porous plate, and may be a flexible porous plate (second porous plate). The anode 40 is preferably a rigid porous plate. When being a flexible porous plate, the anode 40 may be fixed to the backside separating wall 51a, and may be fixed to the second elastic mat 100b. When being a rigid porous plate, the anode 40 can be fixed to the second elastic mat 100b. For fixing the anode 40 to the backside separating wall 51a or the second elastic mat 100b, for example, any known means such as welding, pinning, and bolting may be employed without particular limitations. For example, one may provide a hook (hooked member) at the surface of the inside of the backside separating wall 51a, and fit the anode 40 to the hook, to fix the anode 40 to the backside separating wall 51a. When fixed, the anode 40 is preferably fixed, so that the resilience of the elastic mat 100b is not impaired.

In the electrolysis vessel 6000, the separating membrane 1010 is sandwiched between and pushed by the cathode (first electrode) 30 and the anode (second electrode) 40, that is, the zero-gap configuration realized by pushing the cathode (first electrode) 30 toward the anode (second electrode) 40 by the first elastic mat 100a, and pushing the anode (second electrode) 40 toward the cathode (first electrode) 30 by the second elastic mat 100b.

Such an alkaline water electrolysis vessel 6000 can also exert the same effect as that the electrolysis vessel 3000 does. That is, according to the alkaline water electrolysis vessel 6000, the separating membrane 1010 receives the pressure from both the elastic mats on the anode side and the cathode side, which makes it easy to suppress deformation of the separating membrane 1010 in the vicinity of the periphery of the electrodes. Further, in the electrolysis vessel 6000, the anode chamber A and the cathode chamber C comprise no electroconductive rib, which makes it possible to thinner each electrolytic cell, and thus to downsize the electrolysis vessel to increase the gas production per occupied site area. One or both of the anode chamber and the cathode chamber comprise(s) no electroconductive rib, which makes it possible to reduce the amount of the materials to constitute the electrolysis vessel, and the steps necessary for making the electrolysis vessel.

In the electrolysis vessel 6000, the cathode (first electrode) 30 is pushed toward the anode (second electrode) 40 by the elastic mat (first elastic mat) 100a according to the present invention, and the anode (second electrode) 40 is pushed toward the cathode (first electrode) 30 by the elastic mat (second elastic mat) 100b according to the present invention, which makes it possible to increase the contact pressure at which the separating membrane 1010 is sandwiched between and pushed by the anode 40 and the cathode 30 without impairing the uniformity of the contact pressure, to increase the proportion of the zero-gap area in the electrode area. This makes it possible to reduce the operating voltage to improve the energy efficiency.

In the electrolysis vessel 6000, the contact pressure at which the cathode (first electrode) 30 is pushed toward the anode (second electrode) 40, and the contact pressure at which the anode (second electrode) 40 is pushed toward the cathode (first electrode) 30 is each preferably 50 to 225 gf/cm², and more preferably 75 to 150 gf/cm². The respective contact pressures at the above lower limits or higher make it possible to further reduce the operating voltage to further improve the energy efficiency. The respective contact pressures at the above upper limits or lower can lead to further increased repetitive resilience to maintain sufficient resilience even in long-term use, which makes it easy to keep the energy efficiency of the alkaline water electrolysis vessel high for a long term.

Examples in the above description on the present invention are the alkaline water electrolysis vessels 1000, 2000, 3000, 4000, 5000 and 6000 each comprising the elastic mat 100 for an alkaline water electrolysis vessel according to one embodiment of the present invention (Fig. 2) as the electroconductive elastic mat (100, 100a or 100b). The present invention is not limited to these embodiments. For example, the alkaline water electrolysis vessel can comprise the elastic mat 200, 300, 400, 500 or 600 for an alkaline water electrolysis vessel of the present invention according to the other embodiments as an electroconductive elastic mat.

### <3. Gas Production Method>

A gas production method according to the third aspect of the present invention is a gas production method comprising: (a) electrolyzing alkaline water by means of the alkaline water electrolysis vessel according to the present invention (hereinafter may be referred to as "step (a)"), wherein hydrogen gas and oxygen gas are produced. As the alkaline water electrolysis vessel in the step (a), any of the alkaline water electrolysis vessels according to the above described embodiments may be used. As the alkaline water, a known basic aqueous solution used for producing hydrogen gas and oxygen gas by the alkaline water electrolysis method (such as a KOH aqueous solution and a NaOH aqueous solution) may be employed without particular limitations.

The step (a) can be carried out by supplying an electrolyte (alkaline water) to each of the anode chamber and the cathode chamber of an alkaline water electrolysis vessel according to the present invention, and applying voltage so that a predetermined electrolytic current can flow between the anode and the cathode. Hydrogen gas can be retrieved from the cathode chamber, and oxygen gas can be retrieved from the anode chamber by: retrieving the gas generated by the electrolysis from each chamber together with the electrolyte; and subjecting the retrieved gas to gas-liquid separation. The electrolyte separated from the gas by the gas-liquid separation can be supplied again to each chamber, together with water added to the electrolyte as necessary.

According to the gas production method of the present invention, alkaline water is electrolyzed by means of an alkaline water electrolysis vessel according to the present invention, which makes it possible to improve the energy efficiency in the gas production by alkaline water electrolysis.

### Reference Signs List

10, 210, 310 wire net
100, 200, 300, 400, 500, 600 elastic mat for an alkaline water electrolysis vessel
1010 (ion-permeable) separating membrane
21, 22 gasket
30, 2030 cathode
40, 2040 anode
51 anode-side frame
52 cathode-side frame
51a, 52a (electroconductive) backside separating wall
51b, 52b flange part
61, 62 electroconductive rib
71, 72 current collector
100a first elastic mat
100b second elastic mat
91, 92 rigid current collector
900 conventional zero-gap electrolysis vessel
910 electrode chamber unit
911 electroconductive separating wall
912 flange part
913, 914 electroconductive rib
920 ion-permeable separating membrane
930 gasket
940 anode
950 current collector
960 electroconductive elastic mat
970 cathode
1000, 2000, 3000, 4000, 5000, 6000 alkaline water electrolysis vessel
A anode chamber
C cathode chamber

## Claims

1. An elastic mat for an alkaline water electrolysis vessel, the elastic mat comprising:
at least one wire net being woven or knitted with a metal wire and having spring elasticity in a thickness direction thereof,
wherein the metal wire is a solid wire having a diameter of 0.16 to 0.29 mm, or a stranded wire including a plurality of solid wires each having a diameter of 0.08 to 0.15 mm, or any combination thereof.

2. The elastic mat according to claim 1,
wherein resilience of the elastic mat per unit area when the elastic mat is subjected to 50% compressive deformation is 100 to 450 gf/cm².

3. The elastic mat according to claim 1 or 2,
wherein when the 50% compressive deformation of the elastic mat is repeated twice, resilience of the elastic mat per unit area in a second 50% compressive deformation is no less than 40 gf/cm².

4. The elastic mat according to any one of claims 1 to 3,
wherein the wire net has a wave shape having an amplitude in the thickness direction of the wire net.

5. The elastic mat according to claim 4,
the elastic mat comprising a plurality of the wire nets stacked in the thickness direction of the plurality of the wire nets,
wherein each pair of two adjacent wire nets of the plurality of the wire nets are stacked in such a way that ridge parts of the wave shape of a first wire net of the pair and ridge parts of the wave shape of a second wire net of the pair cross each other in a plan view of the elastic mat.

6. The elastic mat according to any one of claims 1 to 5,
wherein the elastic mat has a total thickness of 7.5 to 10 mm.

7. An alkaline water electrolysis vessel comprising:
an anode chamber housing an anode and generating oxygen gas;
a cathode chamber housing a cathode and generating hydrogen gas;
an ion-permeable separating membrane separating the anode chamber and the cathode chamber; and
a first elastic mat being the elastic mat as defined in any one of claims 1 to 6,
wherein the cathode is a first electrode;
the anode is a second electrode; and
the first electrode is a flexible porous plate, and is pushed toward the second electrode by the first elastic mat.

8. An alkaline water electrolysis vessel comprising:
an anode chamber housing an anode and generating oxygen gas;
a cathode chamber housing a cathode and generating hydrogen gas;
an ion-permeable separating membrane separating the anode chamber and the cathode chamber; and
a first elastic mat being the elastic mat as defined in any one of claims 1 to 6,
wherein the anode is a first electrode;
the cathode is a second electrode; and
the first electrode is a flexible porous plate, and is pushed toward the second electrode by the first elastic mat.

9. The alkaline water electrolysis vessel according to claim 7 or 8,
wherein the second electrode is a rigid porous plate.

10. The alkaline water electrolysis vessel according to claim 9, further comprising:
a second elastic mat being the elastic mat as defined in any one of claims 1 to 6,
wherein the second electrode is pushed toward the first electrode by the second elastic mat.

11. The alkaline water electrolysis vessel according to claim 7 or 8, further comprising:
a second elastic mat being the elastic mat as defined in any one of claims 1 to 6,
wherein the second electrode is a second flexible porous plate; and
the second electrode is pushed toward the first electrode by the second elastic mat.

12. The alkaline water electrolysis vessel according to claim 7 or 8, further comprising:
an electroconductive rigid current collector contacting the second electrode,
wherein the second electrode is a second flexible porous plate; and
the second electrode is supported by the rigid current collector.

13. The alkaline water electrolysis vessel according to claim 12, further comprising:
a second elastic mat being the elastic mat as defined in any one of claims 1 to 6,
wherein the second electrode is pushed toward the first electrode by the second elastic mat, wherein the rigid current collector is arranged between the second electrode and the second elastic mat.

14. A gas production method comprising:
(a) electrolyzing alkaline water by means of the alkaline water electrolysis vessel as defined in any one of claims 7 to 13,
wherein hydrogen gas and oxygen gas are produced.
